(19) Europäisches Patentamt
European Patent Office
Office européen des brevets

(11) EP 4 129 805 A1

(12) **EUROPEAN PATENT APPLICATION**
published in accordance with Art. 153(4) EPC

(43) Date of publication:
**08.02.2023 Bulletin 2023/06**

(21) Application number: **20929495.8**

(22) Date of filing: **01.04.2020**

(51) International Patent Classification (IPC):
***B62D 29/04*** *(1968.09)*

(52) Cooperative Patent Classification (CPC):
**B62D 29/001; B62D 29/04**

(86) International application number:
**PCT/JP2020/015038**

(87) International publication number:
**WO 2021/199380 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NIPPON STEEL CORPORATION**
**Chiyoda-ku**
**Tokyo 100-8071 (JP)**

(72) Inventors:
- **USUI, Masafumi**
  **Tokyo 100-8071 (JP)**
- **IBARAGI, Masaharu**
  **Tokyo 100-8071 (JP)**
- **NEGI, Noriyuki**
  **Tokyo 100-8071 (JP)**
- **NAKAI, Masako**
  **Tokyo 100-8071 (JP)**

(74) Representative: **Vossius & Partner**
**Patentanwälte Rechtsanwälte mbB**
**Siebertstraße 3**
**81675 München (DE)**

(54) **VEHICULAR CARBON FIBER REINFORCED PLASTIC COMPOSITE METAL PLATE, AND VEHICULAR PANEL**

(57) To improve strength, rigidity, vibration damping properties and achieve a weight reduction while suppressing an increase in cost.

A carbon fiber reinforced plastic composite metal plate for vehicles according to the present invention includes: a predetermined metal plate; and a mixed resin layer including: a plurality of carbon fiber reinforced plastic layers provided on at least a portion of one surface or both surfaces of the metal plate, the carbon fiber reinforced plastic layers containing a predetermined matrix resin and carbon reinforcing fibers present in the matrix resin; and a resin layer located at least between any layers of the carbon fiber reinforced plastic layers or at the interface between the carbon fiber reinforced plastic layer and the metal plate, the resin layer containing a resin having a Young's modulus of less than 1 GPa and a loss coefficient of 0.01 or more, which is different from the matrix resin.

FIG. 3A

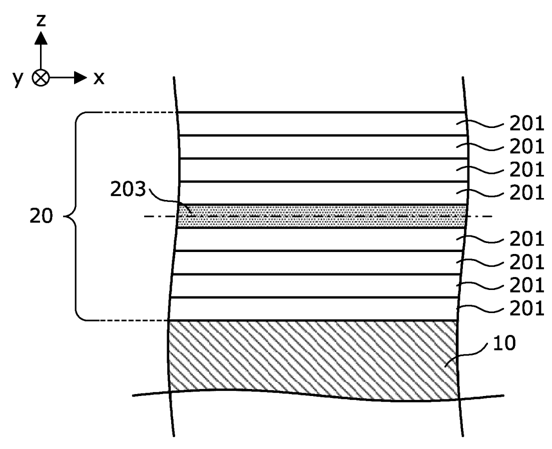


EP 4 129 805 A1

## Description

[Technical Field]

The present invention relates to a carbon fiber reinforced plastic composite metal plate for vehicles and a panel for vehicles.

[Background Art]

In recent years, vehicles (particularly automobiles) are required to be lighter in weight for the purpose of improving fuel efficiency. In the case of steel plate panels, which are an example of metal plate panels used in automobiles, there is a trade-off relationship between achieving weight reduction and ensuring vibration damping properties and rigidity. Therefore, the only way to reduce the weight of a steel plate by itself is to make the steel plate thinner, but the rigidity and vibration damping properties decrease.

In the meantime, fiber reinforced plastics (FRP: Fiber Reinforced Plastics) in which reinforcing fibers (such as, for example, glass fibers or carbon fibers) are contained in a matrix resin to form a composite are lightweight and excellent in tensile strength, processability, and so on. Among them, carbon fiber reinforced plastics (CFRP: Carbon Fiber Reinforced Plastics), which use carbon fibers as a reinforcing fiber, are a promising material for various applications, including automotive members, because they are particularly lightweight and particularly excellent in tensile strength due to the strength of carbon fiber.

Therefore, for example, in Patent Document 1 below, an attempt has been made to improve the vibration damping properties by using CFRP alone and changing the orientation of carbon reinforcing fibers in the CFRP.

[Prior Art Document]

[Patent Document]

Patent Document 1: Japanese Laid-open Patent Publication No. 2017-7514
Patent Document 2: Japanese Laid-open Patent Publication No. 2014-162848
Patent Document 3: Japanese Laid-open Patent Publication No. 2001-253371

[Disclosure of the Invention]

[Problems to Be Solved by the Invention]

However, the CFRP used in Patent Document 1 described above is generally expensive, and manufacturing automobile members only with the CFRP causes an increase in cost.

Here, the vibration damping properties of the panel used in the automobile are achieved based on the two viewpoints of (1) a decrease in the vibration input amount thanks to the improvement in rigidity and (2) an increase in the vibration damping properties of the member. The CFRP is a material that is high in rigidity and has vibration damping properties, and thus, it is considered that a composite of the CFRP is formed only for the required portion of the steel plate, which has been made thinner for weight reduction to cause a decrease in rigidity, thereby making it possible to achieve the weight reduction of the overall weight of the member while improving its rigidity and suppressing the increase in cost as compared to the steel plate alone.

In order to laminate the CFRP to a curved shape such as a panel and improve the rigidity, it is important to orient the fibers in the CFRP in a curved direction (R direction). However, at this time, although the rigidity is ensured in the R direction and the vibration damping properties are improved, it is considered that only the vibration damping properties in such a direction are emphasized, failing to dampen the vibration from each direction.

Further, the CFRP is considered to be a material having high rigidity and high vibration damping properties, but its loss coefficient is lower than that of an elastic body such as general rubber. Therefore, simply laminating the CFRP to a metal plate fails to ensure the vibration damping properties.

Further, simply forming a composite of metal and CFRP having high vibration damping properties does not improve the vibration damping properties, and thus, an attempt has also been made to improve the vibration damping properties by inserting a resin having high damping properties between the metal and the CFRP, or between the CFRPs (see Patent Document 2 and Patent Document 3 described above, for example). However, the position where the resin layer having high damping properties is present in the CFRP has not yet been studied, leaving room for improvement

in terms of improving the vibration damping properties.

Thus, the present invention has been made in consideration of the above-described problems, and an object of the present invention is to provide a carbon fiber reinforced plastic composite metal plate for vehicles and a panel for vehicles that are capable of improving strength, rigidity, and vibration damping properties and achieving a weight reduction while suppressing an increase in cost.

[Means for Solving the Problems]

In order to solve the above-described problems, the present inventors have diligently studied a method of ensuring both the strength and rigidity and the vibration damping properties. At this time, the present inventors have come up with the idea that a resin layer having a specific Young's modulus and loss coefficient is unevenly distributed in a plurality of CFRP layers or the resin layer is inserted between CFRP layers, to thereby ensure both the strength and rigidity and the vibration damping properties.

The gist of the present invention completed based on such findings is as follows.

(1) A carbon fiber reinforced plastic composite metal plate for vehicles, includes: a predetermined metal plate; and a mixed resin layer including: a plurality of carbon fiber reinforced plastic layers provided on at least a portion of one surface or both surfaces of the metal plate, the carbon fiber reinforced plastic layers containing a predetermined matrix resin and carbon reinforcing fibers present in the matrix resin; and a resin layer located at least between any layers of the carbon fiber reinforced plastic layers or at the interface between the carbon fiber reinforced plastic layer and the metal plate, the resin layer containing a resin having a Young's modulus of less than 1.5 GPa and a loss coefficient of 0.01 or more, which is different from the matrix resin.

(2) The carbon fiber reinforced plastic composite metal plate for vehicles according to (1), further includes: a predetermined second metal plate, in which the mixed resin layer is sandwiched between the metal plate and the second metal plate.

(3) The carbon fiber reinforced plastic composite metal plate for vehicles according to (1) or (2), in which in a cross section when the mixed resin layer is cut in a thickness direction, the ratio of an area of the resin layer to the total area of the mixed resin layer is 5% or more and 60% or less.

(4) The carbon fiber reinforced plastic composite metal plate for vehicles according to any one of (1) to (3), in which in a cross section when the mixed resin layer is cut in a thickness direction, the eccentricity ratio of the resin layer defined based on the distance from the neutral plane is 5% or more and 65% or less.

(5) The carbon fiber reinforced plastic composite metal plate for vehicles according to any one of (1) to (3), in which in a cross section when the mixed resin layer is cut in a thickness direction, the resin layer is unevenly distributed on the side close to the neutral plane.

(6) The carbon fiber reinforced plastic composite metal plate for vehicles according to any one of (1) to (5), in which the resin having a Young's modulus of less than 1.5 GPa and a loss coefficient of 0.01 or more is at least one of a thermoplastic polyester elastomer, a modified silicone resin, a polyolefin resin, a polyurethane resin, and a polyester resin.

(7) The carbon fiber reinforced plastic composite metal plate for vehicles according to any one of (1) to (6), in which the matrix resin is a phenoxy resin or an epoxy resin.

(8) The carbon fiber reinforced plastic composite metal plate for vehicles according to any one of (1) to (7), in which the carbon reinforcing fibers are pitch-based carbon reinforcing fibers.

(9) The carbon fiber reinforced plastic composite metal plate for vehicles according to any one of (1) to (8), in which the entire thickness of the carbon fiber reinforced plastic composite metal plate for vehicles is within a range of 0.40 mm or more and 3.00 mm or less, and the ratio of the thickness of the metal plate to the thickness of the mixed resin layer is 0.10 or more and 4.00 or less.

(10) The carbon fiber reinforced plastic composite metal plate for vehicles according to any one of (1) to (9), in which the ratio of a projected area of the metal plate to a projected area of the mixed resin layer when the carbon fiber reinforced plastic composite metal plate for vehicles is viewed from above in the thickness direction is 1.0 or more and 20.0 or less.

(11) The carbon fiber reinforced plastic composite metal plate for vehicles according to any one of (1) to (10), in which the position where a composite of the mixed resin layer is formed is at least one corner portion of the metal plate.

(12) The carbon fiber reinforced plastic composite metal plate for vehicles according to any one of (1) to (10), in which the position where a composite of the mixed resin layer is formed is a substantially center portion of the metal plate.

(13) The carbon fiber reinforced plastic composite metal plate for vehicles according to any one of (1) to (10), in which the position where a composite of the mixed resin layer is formed is at least one corner portion of the metal

plate and a substantially center portion of the metal plate.

(14) The carbon fiber reinforced plastic composite metal plate for vehicles according to any one of (1) to (13), in which the metal plate is a zinc-based plated steel plate or an alloyed hot-dip galvanized steel plate.

(15) The carbon fiber reinforced plastic composite metal plate for vehicles according to any one of (1) to (14), used for a door outer panel, a roof panel, a hood, a fender, or a side outer panel of an automobile.

(16) A panel for vehicles using the carbon fiber reinforced plastic composite metal plate for vehicles according to any one of (1) to (15).

[Effect of the Invention]

As explained above, according to the present invention, it is possible to provide a carbon fiber reinforced plastic composite metal plate for vehicles and a panel for vehicles that are capable of improving strength, rigidity, and vibration damping properties and achieving a weight reduction while suppressing an increase in cost.

[Brief Description of the Drawings]

[FIG. 1A] FIG. 1A is an explanatory view for explaining a CFRP composite metal plate for vehicles according to an embodiment of the present invention.

[FIG. 1B] FIG. 1B is an explanatory view for explaining the CFRP composite metal plate for vehicles according to the same embodiment.

[FIG. 1C] FIG. 1C is an explanatory view for explaining the CFRP composite metal plate for vehicles according to the same embodiment.

[FIG. 2] FIG. 2 is an explanatory view for explaining the CFRP composite metal plate for vehicles according to the same embodiment.

[FIG. 3A] FIG. 3A is a schematic view for explaining a mixed resin layer according to the same embodiment.

[FIG. 3B] FIG. 3B is a schematic view for explaining the mixed resin layer according to the same embodiment.

[FIG. 3C] FIG. 3C is a schematic view for explaining the mixed resin layer according to the same embodiment.

[FIG. 4A] FIG. 4A is a schematic view for explaining the mixed resin layer according to the same embodiment.

[FIG. 4B] FIG. 4B is a schematic view for explaining the mixed resin layer according to the same embodiment.

[FIG. 5] FIG. 5 is a schematic view for explaining the mixed resin layer according to the same embodiment.

[FIG. 6] FIG. 6 is an explanatory view for explaining a drawing direction of carbon reinforcing fibers in the CFRP composite metal plate for vehicles according to the same embodiment.

[FIG. 7] FIG. 7 is an explanatory view for explaining the drawing direction of the carbon reinforcing fibers in the CFRP composite metal plate for vehicles according to the same embodiment.

[FIG. 8] FIG. 8 is an explanatory view for explaining a method of measuring a thickness.

[FIG. 9A] FIG. 9A is an explanatory view for explaining an installation position of the mixed resin layer in the CFRP composite metal plate for vehicles according to the same embodiment.

[FIG. 9B] FIG. 9B is an explanatory view for explaining an installation position of the mixed resin layer in the CFRP composite metal plate for vehicles according to the same embodiment.

[FIG. 9C] FIG. 9C is an explanatory view for explaining an installation position of the mixed resin layer in the CFRP composite metal plate for vehicles according to the same embodiment.

[FIG. 10] FIG. 10 is an explanatory view schematically illustrating a vehicle body structure example of an automobile.

[FIG. 11] FIG. 11 is an explanatory view for explaining one example of a method of manufacturing the CFRP composite metal plate for vehicles according to the same embodiment.

[FIG. 12A] FIG. 12A is an explanatory view for explaining a vibration mode to be focused in evaluating vibration damping properties in an example.

[FIG. 12B] FIG. 12B is an explanatory view for explaining the vibration mode to be focused in evaluating the vibration damping properties in an example.

[FIG. 12C] FIG. 12C is an explanatory view for explaining the vibration mode to be focused in evaluating the vibration damping properties in an example.

[Embodiments for Carrying out the Invention]

Hereinafter, a preferred embodiment of the present invention will be explained in detail with reference to the attached drawings. In this description and the drawings, components having substantially the same functional configuration are denoted by the same reference numerals and symbols, and thus repeated explanation of these is omitted.

(Entire configuration of a CFRP composite metal plate for vehicles)

First, there is explained an entire configuration of a CFRP composite metal plate for vehicles according to an embodiment of the present invention with reference to FIG. 1A to FIG. 2. FIG. 1A to FIG. 2 each are an explanatory view schematically illustrating an entire configuration of the CFRP composite metal plate for vehicles according to this embodiment.

A CFRP composite metal plate for vehicles 1 according to this embodiment is a CFRP composite metal plate used for manufacturing a vehicle such as an automobile, for example. As schematically illustrated in FIG. 1A and FIG. 1B, this CFRP composite metal plate for vehicles 1 includes a predetermined metal plate 10 and a mixed resin layer 20 provided on at least a portion of one surface or both surfaces of the metal plate 10. Further, as schematically illustrated in FIG. 1C, the CFRP composite metal plate for vehicles 1 may include the predetermined metal plate 10, a predetermined second metal plate 15, and the mixed resin layer 20 sandwiched between the metal plate 10 and the second metal plate 15.

Here, the term "composite formation" means that the metal plate 10 and the mixed resin layer 20 (or the metal plate 10, the mixed resin layer 20, and the second metal plate 15) are bonded (laminated) to each other to be integrated. Further, the term "integration" means that the metal plate 10 and the mixed resin layer 20 (or the metal plate 10, the mixed resin layer 20, and the second metal plate 15) move as a single unit when being processed or deformed.

Further, FIG. 1A to FIG. 1C illustrate the case where the mixed resin layer 20 is directly provided on at least one surface of the metal plate 10 or the second metal plate 15, but as schematically illustrated in FIG. 2, for example, the metal plate 10 or the second metal plate 15, and the mixed resin layer 20 may be formed into a composite via a bonding resin layer 30 made of a predetermined resin material.

In the CFRP composite metal plate for vehicles 1 according to this embodiment, as will be described in detail below, the mixed resin layer 20 satisfying specific conditions is provided on the metal plate 10 or the second metal plate 15. This makes it possible to improve a vibration damping ratio of bending elasticity while ensuring anisotropy and bending rigidity of mechanical properties in the metal plate 10 and the second metal plate 15. As a result, in the CFRP composite metal plate for vehicles 1 according to this embodiment, it becomes possible to improve the strength, rigidity, and vibration damping properties and achieve the weight reduction while suppressing the increase in cost.

There will be described in detail the respective components and the other configuration of the CFRP composite metal plate for vehicles 1 below.

(Regarding the metal plate 10 and the second metal plate 15)

The detailed material, shape, thickness, and the like of the metal plate 10 and the second metal plate 15 are not particularly limited as long as they can be molded by pressing or the like, but their shape is preferably a thin plate shape. Examples of the material of the metal plate 10 and the second metal plate 15 include iron, titanium, aluminum, magnesium, alloys thereof, and so on. Here, examples of the alloys include iron-based alloys (including stainless steel), Ti-based alloys, Al-based alloys, Mg alloys, and so on. The material of the metal plate 10 and the second metal plate 15 is preferably a steel material, an iron-based alloy, titanium, and aluminum, and more preferably steel materials having a higher elastic modulus than other metal kinds. Examples of such steel materials include steel materials such as a cold-rolled steel sheet for general use, drawing, or ultra deep drawing specified in the Japanese Industrial Standards (JIS) or the like as a thin plate-shaped steel sheet used for automobiles, a workable cold-rolled high-tensile steel sheet for automobiles, a hot-rolled steel sheet for general and working use, a hot-rolled steel sheet for automobile structure, and a workable hot-rolled high-tensile steel sheet for automobiles, and carbon steel, alloy steel, high-tensile steel, and so on used for general structural and mechanical structure purposes can also be cited as the steel material that is not limited to a thin plate shape.

The steel material may be subjected to any surface treatment. Here, examples of the surface treatment include various plating treatments such as galvanizing and aluminum plating, chemical conversion treatments such as a chromate treatment and a non-chromate treatment, and a physical surface roughening treatment such as sandblasting or a chemical surface roughening treatment such as chemical etching, but the surface treatment is not limited to these. Further, alloying of plating or a plurality of kinds of surface treatments may be performed. As the surface treatment, at least a treatment intended for imparting rust prevention is preferably performed.

The metal plate 10 and the second metal plate 15 according to this embodiment may be plated with various kinds of plating. Such plating improves the corrosion resistance of the metal plate 10 and the second metal plate 15. When the metal plate 10 and the second metal plate 15 are a steel material in particular, performing plating is more suitable. The kind of plating is not particularly limited, and various kinds of well-known plating can be used. For example, as a plated steel plate (steel material), a hot-dip galvanized steel plate, a hot-dip alloyed galvanized steel plate, a Zn-Al-Mg-based alloy-plated steel plate, an aluminum-plated steel plate, an electrogalvanized steel plate, an electro-Zn-Ni-based alloy-plated steel plate, and so on can be used.

Further, in order to improve the adhesiveness to the mixed resin layer 20, it is preferable to treat the surfaces

of the metal plate 10 and the second metal plate 15 (for example, steel plates) with a primer. As the primer used in this treatment, for example, a silane coupling agent or a triazine thiol derivative is preferable. As the silane coupling agent, there are cited as an example an epoxy-based silane coupling agent, an amino-based silane coupling agent, and an imidazole silane compound. A the triazine thiol derivative, there are cited as an example 6-diallylamino-2,4-dithiol-1,3,5-triazine, 6-methoxy-2,4-dithiol-1,3,5-triazine monosodium, 6-propyl-2,4-dithiolamino-1,3,5-triazine monosodium, 2,4,6-trithiol-1,3,5-triazine, and so on.

Incidentally, the second metal plate 15 may be different from the metal plate 10 or may be the same as the metal plate 10.

Further, the thickness of the metal plate 10 (a thickness $d_1$ in FIG. 1A and FIG. 1B) and the thickness of the second metal plate 15 (a thickness $d_3$ in FIG. 1C) are not particularly limited, can be determined as appropriate according to a mechanical strength or the like required for the CFRP composite metal plate for vehicles 1, and can be set to about 0.10 mm to 1.00 mm, for example.

(Regarding the mixed resin layer 20)

Then, with reference to FIG. 3A to FIG. 5, the mixed resin layer 20 according to this embodiment is explained in detail. FIG. 3A to FIG. 5 each are a schematic view for explaining the mixed resin layer 20 according to this embodiment. Incidentally, in the following explanation, the case where a composite of the mixed resin layer 20 is formed with the metal plate 10 will be explained as an example, but the same effect can be exhibited even in the case where a composite of the mixed resin layer 20 is formed with the second metal plate 15.

The mixed resin layer 20 according to this embodiment includes, as schematically illustrated in FIG. 3A to FIG. 3C, (a) a plurality of CFRP layers 201 containing a predetermined matrix resin and carbon reinforcing fibers present in the matrix resin, and (b) a resin layer 203 containing a resin having a Young's modulus of less than 1.5 GPa and a loss coefficient of 0.01 or more, which is different from the matrix resin contained in the CFRP layer 201.

Here, the above-described resin layer 203 containing the resin having a Young's modulus of less than 1.5 GPa and a loss coefficient of 0.01 or more, as schematically illustrated in FIG. 3A, may be located in the middle portion of the mixed resin layer 20, as schematically illustrated in FIG. 3B, may be located at the interface between the mixed resin layer 20 and the metal plate 10, or as schematically illustrated in FIG. 3C, may be unevenly distributed between any layers of the CFRP layers 201 between the middle portion of the mixed resin layer 20 and the interface between the mixed resin layer 20 and the metal plate 10.

The CFRP composite metal plate for vehicles 1 according to this embodiment includes the mixed resin layer 20 containing the CFRP layers 201 and the resin layer 203 as described above, thereby making it possible to improve the strength, rigidity, and vibration damping properties and achieve the weight reduction while suppressing the increase in cost.

Hereinafter, the CFRP layer 201 and the resin layer 203 forming the mixed resin layer 20 will be explained in more detail.

<Regarding the CFRP layer 201>

The CFRP layer 201 according to this embodiment contains the predetermined matrix resin and the carbon reinforcing fibers that are contained in this matrix resin to form a composite. This CFRP layer 201 has a laminated structure composed of a plurality of CFRPs.

Here, the total thickness of the CFRP layers 201 can be appropriately set according to an intended use. For example, the total thickness of the CFRP layers 201 can be set to about 0.2 mm to 2.0 mm, for example. Further, the total number of layers n of the CFRP layer 201 can be appropriately set according to an intended use. Further, the respective CFRP layers 201 may have the same configuration or may be different. That is, the kinds and content ratios of the matrix resin and the carbon reinforcing fibers forming each of the CFRP layers 201, and the like may be different for each layer. However, from the viewpoint of ensuring the adhesion of each of the CFRP layers 201, it is preferable to select the same or the same kind of resin, or a resin kind having a similar ratio of polar groups contained in a polymer, or the like for a plurality of the CFRP layers.

Here, the term "same resin" means that the resin is composed of the same components and has the same composition ratio, and the term "same kind of resin" means that the composition ratio may be different as long as the main component is the same. The "same kind of resin" includes the "same resin." Further, the term "main component" means a component to be contained in an amount of 50 parts by mass or more out of 100 parts by mass of the total resin component. Incidentally, the "resin component" includes a thermoplastic resin and a thermosetting resin, but does not include non-resin components such as a crosslinking agent.

[Regarding the matrix resin]

In the CFRP layer 201 according to this embodiment, the matrix resin is a solidified product or cured product of a resin composition (or a crosslinkable resin composition). Here, the term "solidified product" simply means that the resin component itself has solidified, and the term "cured product" means that the resin component has been cured by adding various curing agents thereto. Incidentally, the curing agents that can be contained in the cured product also include a later-described crosslinking agent, and the above-described "cured product" includes a crosslinked cured product formed by crosslinking.

0 Resin composition

The resin composition forming the matrix resin can be either a thermosetting resin or a thermoplastic resin. Hereinafter, the case where the resin composition forming the matrix resin contains a thermoplastic resin as a main component and the case where the resin composition forming the matrix resin contains a thermosetting resin as a main component each will be explained in detail.

First, there is explained the case where the resin composition forming the matrix resin contains a thermoplastic resin as a main component.

When the resin composition forming the matrix resin contains the thermoplastic resin as a main component, the kind of the thermoplastic resin that can be used for the matrix resin is not particularly limited, but there can be used one or more selected from, for example, a phenoxy resin, polyolefin and its acid modified product, polystyrene, polymethyl methacrylate, an AS resin, an ABS resin, thermoplastic aromatic polyesters such as polyethylene terephthalate and polybutylene terephthalate, polycarbonate, polyimide, polyamide, polyamideimide, polyetherimide, polyethersulfone, polyphenyleneether and its modified product, polyphenylene sulfide, polyoxymethylene, polyarylate, polyetherketone, polyetheretherketone, polyetherketoneketone, nylon, and so on. Incidentally, the "thermoplastic resin" also includes resins that can be a crosslinked cured product in a second cured state to be described later. Further, as the thermosetting resin that can be used for the matrix resin, there can be used one or more selected from, for example, an epoxy resin, a vinylester resin, a phenolic resin, and a urethane resin.

Here, in the case where the matrix resin contains the thermoplastic resin, it is possible to solve the problems caused when using the thermosetting resin for the matrix resin of the CFRP, namely, the problems that the CFRP layer 201 is brittle, the tact time is long, it is impossible to perform bending, and other factors. However, the thermoplastic resin usually has a high viscosity when melted, which fails to impregnate the carbon reinforcing fibers therewith in a low viscosity state like the thermosetting resin such as an epoxy resin before thermal curing, and therefore has inferior impregnation of the carbon reinforcing fibers therewith. Therefore, it is impossible to increase a reinforcing fiber density Vf in the CFRP layer 201 as in the case where the thermosetting resin is used as the matrix resin. In the case where the epoxy resin is used as the matrix resin, for example, Vf can be made about 60%, but in the case where the thermoplastic resin such as polypropylene or nylon is used as the matrix resin, Vf becomes about 50% in many cases. Further, when the thermoplastic resin such as polypropylene or nylon is used, the CFRP layer 201 sometimes fails to have high heat resistance as in the case where the thermosetting resin such as an epoxy resin is used.

In order to solve the problems caused when using such a thermoplastic resin, it is preferable to use a phenoxy resin as the matrix resin. The phenoxy resin is very similar to the epoxy resin in molecular structure, and thus the phenoxy resin has the same heat resistance as that of the epoxy resin and has improved adhesiveness to the metal plate 10. Further, a curing component such as an epoxy resin is added to the phenoxy resin to be copolymerized, thereby making it possible to obtain what is called a partial curable resin. Such a partial curable resin is used as the matrix resin, thereby making it possible to obtain a matrix resin having excellent impregnation of the carbon reinforcing fibers therewith. Furthermore, thermally curing the curing component in this partial curable resin makes it possible to suppress melting or softening of the matrix resin when the matrix resin in the CFRP layer 201 is exposed to high temperatures, like ordinary thermoplastic resins. The amount of the curing component added to the phenoxy resin can be determined appropriately by taking into account the impregnation of the carbon reinforcing fibers with the phenoxy resin, the brittleness of the CFRP layer 201, the tack time, the processability, or the like. Using the phenoxy resin as the matrix resin as above makes it possible to add and control the curing component with a high degree of freedom.

Incidentally, a sizing agent having a high affinity for the epoxy resin is often applied to the surface of the carbon reinforcing fibers, for example. Since the phenoxy resin has a structure very similar to that of the epoxy resin, the use of the phenoxy resin as the matrix resin allows the sizing agent for the epoxy resin to be used as it is. Therefore, it is possible to increase cost competitiveness.

Further, among the thermoplastic resins, the phenoxy resin has good moldability and excellent adhesiveness to the carbon reinforcing fibers or the metal plate 10, and further, the use of an acid anhydride, an isocyanate compound, caprolactam, or the like as the crosslinking agent makes it also possible to impart the same properties as those of the thermosetting resin with high heat resistance to the phenoxy resin after molding. Therefore, in this embodiment, as the

resin component of the matrix resin, it is preferable to use a solidified product or cured product of the resin composition containing 50 parts by mass or more of the phenoxy resin with respect to 100 parts by mass of the resin component. Using such a resin composition enables a firm bond of the metal plate 10. The resin composition more preferably contains 55 parts by mass or more of the phenoxy resin with respect to 100 parts by mass of the resin component. An adhesive resin composition can be in the form of a powder, a liquid such as varnish, or a solid such as a film, for example.

Incidentally, the content of the phenoxy resin can be measured using infrared spectroscopy (IR: InfraRed spectroscopy) as follows, and when analyzing the content ratio of the phenoxy resin from a resin composition to be analyzed by the infrared spectroscopy, it can be measured by using a general method of infrared spectroscopic analysis such as a transmission method or an ATR reflection method.

The CFRP layer 201 is cut out with a sharp cutting tool or the like, fibers and granular materials are removed with tweezers or the like as much as possible, and a resin composition to be analyzed is sampled from the CFRP layer 201. In the case of the transmission method, a KBr powder and a powder of the resin composition to be analyzed are crushed while being uniformly mixed in a mortar or the like to fabricate a thin film as a sample. In the case of the ATR reflection method, as in the transmission method, the powders may be crushed while being uniformly mixed in a motor to fabricate a tablet as a sample, or a sample may be made in a manner that the surface of a single crystal KBr tablet (for example, 2 mm in diameter × 1.8 mm in thickness) is scratched with a file or the like and a powder of the resin composition to be analyzed is sprinkled on the surface to make it adhere thereto. In either method, it is important to measure the background of a KBr simple substance before mixing with the resin to be analyzed. As an IR measuring apparatus, a commercially available general measuring apparatus can be used, but it is preferable to use an apparatus that has an analytical accuracy capable of distinguishing absorbances (Absorbance) in 1% unit and capable of distinguishing wavenumbers (Wavenumber) in 1 $cm^{-1}$ unit, and, for example, FT/IR-6300 manufactured by JASCO Corporation, and so on can be cited.

In the case of examining the content of the phenoxy resin, the absorption peaks of the phenoxy resin are present, for example, at 1450 to 1480 $cm^{-1}$, in the vicinity of 1500 $cm^{-1}$, in the vicinity of 1600 $cm^{-1}$, and so on. Thus, it is possible to calculate the content of the phenoxy resin based on a previously created calibration curve indicating the relationship between the intensity of the above-described absorption peak and the content of the phenoxy resin and the measured intensity of the absorption peak.

Here, the "phenoxy resin" is a linear polymer obtained from the condensation reaction of a bivalent phenolic compound with epihalohydrin or from the polyaddition reaction of a bivalent phenolic compound with a bifunctional epoxy resin, and is an amorphous thermoplastic resin. The phenoxy resin can be obtained in a solution or under a solvent-free condition by conventional well-known methods, and can be used in the form of powder, varnish, or film. The average molecular weight of the phenoxy resin is, as a mass average molecular weight (Mw), within a range of 10,000 or more and 200,000 or less, for example, and preferably within a range of 20,000 or more and 100,000 or less and more preferably within a range of 30,000 or more and 80,000 or less. Mw of the phenoxy resin is made to fall within a range of 10,000 or more, thereby making it possible to increase the strength of a molded body, and this effect is further enhanced by setting Mw to 20,000 or more and further setting Mw to 30,000 or more. On the other hand, Mw of the phenoxy resin is set to 200,000 or less, and thereby, it can be made excellent in workability and processability, and this effect is further enhanced by setting Mw to 100,000 or less and further setting Mw to 80,000 or less. Incidentally, Mw in this description is set to a value measured by gel permeation chromatography (GPC) and converted using a standard polystyrene calibration curve.

The hydroxyl equivalent (g/eq) of the phenoxy resin used in this embodiment is within a range of 50 or more and 1000 or less, for example, and preferably within a range of 50 or more and 750 or less and more preferably within a range of 50 or more and 500 or less. The hydroxyl equivalent of the phenoxy resin is set to 50 or more, thereby making it possible to improve the mechanical properties of the cured product because the water absorption rate decreases due to a decrease in the number of hydroxyl groups. On the other hand, the hydroxyl equivalent of the phenoxy resin is set to 1,000 or less, thereby making it possible to suppress the decrease in the number of hydroxyl groups, so that it is possible to improve the affinity for an adherend and improve the mechanical properties of the CFRP composite metal plate for vehicles door panel 1. This effect is further enhanced by setting the hydroxyl equivalent to 750 or less and further setting it to 500 or less.

Further, a glass transition temperature (Tg) of the phenoxy resin in the range of 65°C or more and 150°C or less, for example, is suitable, and the glass transition temperature is preferably within a range of 70°C or more and 150°C or less. Tg of the phenoxy resin is 65°C or more, thereby making it possible to sufficiently ensure the thickness of the CFRP layer 201 because it is possible to prevent the flowability of the resin from increasing too much while ensuring the moldability. On the other hand, when Tg of the phenoxy resin is 150°C or less, the melt viscosity decreases, and thus the impregnation of a reinforcing fiber base with the phenoxy resin without defects such as voids is facilitated, resulting in that it is possible to perform a lower-temperature bonding process. Incidentally, Tg of the resin in this description is a numeric value calculated from a peak value of second scanning by performing a measurement at a temperature within a range of 20 to 280°C under a temperature rise condition of 10°C/minute by using a differential

scanning calorimetry apparatus.

The phenoxy resin is not particularly limited as long as it satisfies the above-described physical properties, but preferable examples of the phenoxy resin include bisphenol A-type phenoxy resins, (which can be obtained as, for example, Phenotohto YP-50, Phenotohto YP-50S, and Phenotohto YP-55U manufactured by NIPPON STEEL Chemical & Material Co., Ltd.), bisphenol F-type phenoxy resins, (which can be obtained as, for example, Phenotohto FX-316 manufactured by NIPPON STEEL Chemical & Material Co., Ltd.), and copolymer-type phenoxy resins of bisphenol A and bisphenol F, (which can be obtained as, for example, YP-70 manufactured by NIPPON STEEL Chemical & Material Co., Ltd.), and other than the above-described phenoxy resins, there can be cited special phenoxy resins such as a brominated phenoxy resin, a phosphorus-containing phenoxy resin, and a sulfone group-containing phenoxy resin, (which can be obtained as, for example, Phenotohto YPB-43C, Phenotohto FX293, YPS-007, and so on manufactured by NIPPON STEEL Chemical & Material Co., Ltd.), and so on. These resins can be used alone or in a mixture of two or more kinds.

The thermoplastic resin used as a resin component of the matrix resin is preferably, in a temperature zone within a range of 160 to 250°C, one with a melt viscosity of 3,000 Pa·s or less, more preferably one with a melt viscosity within a range of 90 Pa·s or more and 2,900 Pa·s or less, and further preferably one with a melt viscosity within a range of 100 Pa·s or more and 2,800 Pa·s or less. The melt viscosity in a temperature zone within a range of 160 to 250°C is set to 3,000 Pa·s or less, and thereby the flowability during melting is improved and defects such as voids are less likely to occur in the CFRP layer 201. On the other hand, in the case of the melt viscosity being 90 Pa·s or less, the molecular weight as a resin composition is too small, and when the molecular weight is small, the resin composition is embrittled, leading to a decrease in the mechanical strength of the CFRP composite metal plate for vehicles 1.

0 Crosslinkable resin composition

The crosslinkable resin composition (namely, the cured product of the resin composition) can also be formed by blending, as a crosslinking agent, for example, an acid anhydride, isocyanate, caprolactam, or the like with the resin composition containing the phenoxy resin (to be also referred to as a "phenoxy resin (A)" below). The crosslinkable resin composition utilizes a secondary hydroxyl group contained in the phenoxy resin (A) to cause a crosslinking reaction, and thereby the heat resistance of the resin composition improves, resulting in that it is advantageous for application to members used under higher temperature environments. For crosslinking formation using the secondary hydroxyl group of the phenoxy resin (A), a crosslinkable resin composition with a crosslinking curable resin (B) and a crosslinking agent (C) blended therewith is preferably used. As the crosslinking curable resin (B), for example, an epoxy resin or the like can be used, but it is not particularly limited. Using such a crosslinkable resin composition makes it possible to obtain a cured product in a second cured state (the crosslinked cured product) with Tg of the resin composition greatly improved as compared to the case of the phenoxy resin (A) alone. Tg of the crosslinked cured product of the crosslinkable resin composition is preferably 160°C or more, for example, and preferably falls within a range of 170°C or more and 220°C or less.

In the crosslinkable resin composition, as the crosslinking curable resin (B) to be blended with the phenoxy resin (A), a bifunctional or more epoxy resin is preferable. Examples of the bifunctional or more epoxy resin include bisphenol A-type epoxy resins, (which can be obtained as, for example, Epotohto YD-011, Epotohto YD-7011, and Epotohto YD-900 manufactured by NIPPON STEEL Chemical & Material Co., Ltd.), bisphenol F-type epoxy resins, (which can be obtained as, for example, Epotohto YDF-2001 manufactured by NIPPON STEEL Chemical & Material Co., Ltd.), diphenyl ether-type epoxy resins, (which can be obtained as, for example, YSLV-80DE manufactured by NIPPON STEEL Chemical & Material Co., Ltd.), tetramethylbisphenol F-type epoxy resins, (which can be obtained as, for example, YSLV-80XY manufactured by NIPPON STEEL Chemical & Material Co., Ltd.), bisphenol sulfide-type epoxy resins, (which can be obtained as, for example, YSLV-120TE manufactured by NIPPON STEEL Chemical & Material Co., Ltd.), hydroquinone-type epoxy resins, (which can be obtained as, for example, Epotohto YDC-1312 manufactured by NIPPON STEEL Chemical & Material Co., Ltd.), phenol novolac-type epoxy resins, (which can be obtained as, for example, Epotohto YDPN-638 manufactured by NIPPON STEEL Chemical & Material Co., Ltd.), ortho-cresol novolac-type epoxy resins, (which can be obtained as, for example, Epotohto YDCN-701, Epotohto YDCN-702, Epotohto YDCN-703, and Epotohto YDCN-704 manufactured by NIPPON STEEL Chemical & Material Co., Ltd.), aralkyl naphthalene diol novolac-type epoxy resins, (which can be obtained as, for example, ESN-355 manufactured by NIPPON STEEL Chemical & Material Co., Ltd.), triphenylmethane-type epoxy resins, (which can be obtained as, for example, EPPN-502H manufactured by Nippon Kayaku Co., Ltd.), and so on, but the bifunctional or more epoxy resin is not limited to these. Further, these epoxy resins may be used alone, or in a mixture of two or more kinds.

Further, the crosslinking curable resin (B) is not particularly limited, but crystalline epoxy resins are preferable and the crystalline epoxy resin whose melting point is within a range of 70°C or more and 145°C or less and whose melt viscosity at 150°C is 2.0 Pa·s or less is more preferable. Using the crystalline epoxy resin exhibiting such melting characteristics makes it possible to reduce the melt viscosity of the crosslinkable resin composition as the resin composition and improve the adhesiveness of the CFRP layer 201. When the melt viscosity exceeds 2.0 Pa·s, the moldability of the crosslinkable resin composition decreases and the homogeneity of the CFRP composite metal plate for vehicles 1 decreases in some cases.

Examples of the crystalline epoxy resin suitable as the crosslinking curable resin (B) include Epotohto YSLV-80XY, YSLV-70XY, YSLV-120TE, and YDC-1312 manufactured by NIPPON STEEL Chemical & Material Co., Ltd., YX-4000, YX-4000H, YX-8800, YL-6121H, YL-6640, and so on manufactured by Mitsubishi Chemical Corporation, HP-4032, HP-4032D, HP-4700, and so on manufactured by DIC Corporation, and NC-3000 and so on manufactured by Nippon Kayaku Co., Ltd..

The crosslinking agent (C) forms an ester bond with the secondary hydroxyl group of the phenoxy resin (A), to thereby crosslink the phenoxy resin (A) three-dimensionally. Therefore, unlike such strong crosslinking as curing of the thermosetting resin, the crosslinking can be broken by a hydrolysis reaction, so that the metal plate 10 and the CFRP layer 201 can be easily detached from each other. This allows the metal plate 10 to be recycled.

As the crosslinking agent (C), the acid anhydride is preferable. The acid anhydride is not particularly limited as long as it is solid at ordinary temperature and does not have sublimability very much, but from the point of imparting heat resistance to the CFRP composite metal plate for vehicles 1 and reactivity, an aromatic acid anhydride with two or more acid anhydrides to react with the hydroxyl group of the phenoxy resin (A) is preferable. Particularly, aromatic compounds with two acid anhydride groups, such as pyromellitic acid anhydride, are suitably used because they have a higher crosslinking density and better heat resistance than a combination of trimellitic acid anhydride and a hydroxyl group. Among aromatic dianhydrides, aromatic dianhydrides having compatibility with the phenoxy resin and the epoxy resin, such as, for example, 4,4'-oxydiphthalic acid, ethylene glycol bisanhydrotrimellitate, and 4,4'-(4,4'-isopropylidenediphenoxy) diphthalic anhydride, are more preferable because they have a large effect of improving Tg. Particularly, the aromatic dianhydride with two acid anhydride groups, such as pyromellitic acid anhydride, is suitably used because it has an improved crosslinking density and improved heat resistance as compared to phthalic anhydride with only one acid anhydride group, for example. That is, the aromatic dianhydride has two acid anhydride groups, to thus have good reactivity, and a crosslinked cured product having a strength sufficient for demolding can be obtained in a short molding time, and at the same time, by the esterification reaction with the secondary hydroxyl group in the phenoxy resin (A), four carboxyl groups are produced, thus making it possible to increase a final crosslinking density.

The reaction of the phenoxy resin (A), the epoxy resin as the crosslinking curable resin (B), and the crosslinking agent (C) is crosslinked and cured by the esterification reaction between the secondary hydroxyl group in the phenoxy resin (A) and the acid anhydride group of the crosslinking agent (C), as well as by the reaction between the carboxyl group produced by this esterification reaction and the epoxy group of the epoxy resin. By the reaction between the phenoxy resin (A) and the crosslinking agent (C), a phenoxy resin crosslinked body can be obtained, but the coexistence of the epoxy resin reduces the melt viscosity of the resin composition, thus exhibiting excellent characteristics such as an improvement in impregnation of the adherend, acceleration of crosslinking reaction, an improvement in crosslinking density, and an improvement in mechanical strength.

Incidentally, in the crosslinkable resin composition, the epoxy resin as the crosslinking curable resin (B) coexists, but it is considered that the phenoxy resin (A), which is a thermoplastic resin, is the main component, and the esterification reaction between the secondary hydroxyl group of the phenoxy resin (A) and the acid anhydride group of the crosslinking agent (C) preferentially occurs. That is, the reaction between the acid anhydride used as the crosslinking agent (C) and the epoxy resin used as the crosslinking curable resin (B) takes longer time (a reaction rate is slower), and thus, the reaction between the crosslinking agent (C) and the secondary hydroxyl group of the phenoxy resin (A) occurs first, and then the crosslinking agent (C) remaining from the previous reaction or the remaining carboxyl group derived from the crosslinking agent (C) reacts with the epoxy resin, and thereby the crosslinking density is further increased. Therefore, unlike the resin composition containing the epoxy resin as its main component, which is a thermosetting resin, the crosslinked cured product obtained from the crosslinkable resin composition is a thermoplastic resin and has excellent storage stability.

In the crosslinkable resin composition using the crosslinking of the phenoxy resin (A), the crosslinking curable resin (B) is preferably contained to fall within a range of 5 parts by mass or more and 85 parts by mass or less with respect to 100 parts by mass of the phenoxy resin (A). The content of the crosslinking curable resin (B) to 100 parts by mass of the phenoxy resin (A) is more preferably within a range of 9 parts by mass or more and 83 parts by mass or less, and further preferably within a range of 10 parts by mass or more and 80 parts by mass or less. By setting the content of the crosslinking curable resin (B) to 85 parts by mass or less, a curing time of the crosslinking curable resin (B) can be shortened, resulting in that the strength required for demolding can be easily obtained in a short time, and further, the recyclability of the FRP layer 20 improves. This effect is further enhanced by setting the content of the crosslinking curable resin (B) to 83 parts by mass or less and further setting the content to 80 parts by mass or less. On the other hand, when the content of the crosslinking curable resin (B) is 5 parts by mass or more, the effect of improving the crosslinking density by the addition of the crosslinking curable resin (B) is obtained easily, the crosslinked cured product of the crosslinkable resin composition is more likely to exhibit Tg of 160°C or more, and the flowability is further

improved. Incidentally, the content of the crosslinking curable resin (B) is measured in the same manner for the peak derived from the epoxy resin by the method using infrared spectroscopy as described above, and thereby, the content of the crosslinking curable resin (B) can be measured.

The blending amount of the crosslinking agent (C) is generally an amount within a range of 0.6 mol or more and 1.3 mol or less of the acid anhydride group with respect to 1 mol of the secondary hydroxyl group of the phenoxy resin (A), preferably an amount within a range of 0.7 mol or more and 1.3 mol or less, and more preferably within a range of 1.1 mol or more and 1.3 mol or less. When the content of the acid anhydride group is 0.6 mol or more, the crosslinking density increases, resulting in excellent mechanical properties and heat resistance. This effect is further enhanced by setting the content of the acid anhydride group to 0.7 mol or more and further setting the content to 1.1 mol or more. When the content of the acid anhydride group is 1.3 mol or less, it is possible to prevent unreacted acid anhydrides or carboxyl groups from adversely affecting the curing characteristics or crosslinking density. Therefore, the blending amount of the crosslinking curable resin (B) is preferably adjusted according to the blending amount of the crosslinking agent (C). Specifically, for example, in order to cause the carboxyl group produced by the reaction between the secondary hydroxyl group of the phenoxy resin (A) and the acid anhydride group of the crosslinking agent (C) to react with the epoxy resin used as the crosslinking curable resin (B), the blending amount of the epoxy resin may be set to fall within a range of 0.5 mol or more and 1.2 mol or less at an equivalent ratio with the crosslinking agent (C). Preferably, the equivalent ratio of the crosslinking agent (C) and the epoxy resin is within a range of 0.7 mol or more and 1.0 mol or less.

The crosslinkable resin composition can be obtained by blending the crosslinking agent (C) with the phenoxy resin (A) and the crosslinking curable resin (B), but an accelerator (D) serving as a catalyst may further be added so that the crosslinking reaction is performed securely. The accelerator (D) is not particularly limited as long as it is solid at ordinary temperature and has no sublimability, and examples thereof include tertiary amines such as triethylenediamine, imidazoles such as 2-methylimidazole, 2-phenylimidazole, and 2-phenyl-4-methylimidazole, organic phosphines such as triphenylphosphine, tetraphenylboron salts such as tetraphenylphosphonium tetraphenylborate, and so on. These accelerators (D) may be used alone, or in a combination of two or more kinds. Incidentally, in the case where the crosslinkable resin composition is made into a fine powder and the fine powder is made to adhere to the reinforcing fiber base by using a powder coating method in an electrostatic field to form the matrix resin, as the accelerator (D), an imidazole-based latent catalyst that is solid at ordinary temperature, which has a catalyst activity temperature of 130°C or more, is preferably used. When the accelerator (D) is used, the blending amount of the accelerator (D) is preferably set to fall within a range of 0.1 parts by mass or more and 5 parts by mass or less with respect to 100 parts by mass of the total amount of the phenoxy resin (A), the crosslinking curable resin (B), and the crosslinking agent (C).

The crosslinkable resin composition is solid at ordinary temperature, and as for its melt viscosity, the minimum melt viscosity, which is the lower limit value of the melt viscosity in a temperature zone within a range of 160 to 250°C, is preferably 3,000 Pa·s or less, more preferably 2,900 Pa·s or less, and further preferably 2,800 Pa·s or less. The minimum melt viscosity in a temperature zone within a range of 160 to 250°C is set to 3,000 Pa·s or less, thereby making it possible to sufficiently impregnate the adherend with the crosslinkable resin composition at the time of thermocompression bonding by heat pressing or the like and suppress generation of defects such as voids in the CFRP layer 201, and thus the mechanical properties of the CFRP composite metal plate for vehicles 1 improve. This effect is further enhanced by setting the minimum melt viscosity in a temperature zone within a range of 160 to 250°C to 2,900 Pa·s or less and further setting it to 2,800 Pa·s or less.

With the resin composition (including the crosslinkable resin composition) for forming the matrix resin, there may be blended, for example, natural rubber, synthetic rubber, an elastomer, and so on, various inorganic fillers, and other additives such as a solvent, an extender, a coloring agent, an antioxidant, an ultraviolet inhibitor, a flame retardant, and a flame retardant auxiliary within a range not impairing the adhesiveness and the physical properties.

Then, there is explained the case where the resin composition forming the matrix resin contains a thermosetting resin as a main component.

In such a case, the resin composition forming the matrix resin is composed of a thermosetting resin, a curing agent, and a curing accelerator.

As the kind of the above-described thermosetting resin, there can be cited at least one kind of resin selected from the group consisting of an epoxy resin, a vinyl ester resin, a phenolic resin, and a urethane resin, for example. Among the above-described thermosetting resins, the epoxy resin is preferably used as the matrix resin from the two viewpoints of heat resistance and strength.

The epoxy resin is a resin having one or more epoxy resins in one molecule, and generally has such a structure as illustrated in the following (structural formula 1).

[Chemical formula 1]

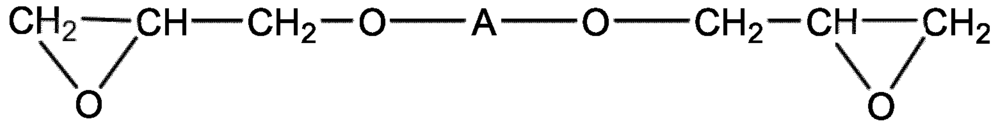

...(Structural formula 1)

Regarding the above-described epoxy resin, for example, as a divalent epoxy resin, various known compounds can be used. For example, as the divalent epoxy resin, there can be cited epoxy resins derived from chain aliphatic diols such as ethylene glycol, trimethylene glycol, propylene glycol, 1,3-butanediol, 1,4-butanediol, 1,pentanediol, 1,4-pentanediol, 1,5-pentanediol, and 1,6-hexanediol, epoxy resins derived from cyclic aliphatic diols such as cyclohexanediol, cyclodecanediol, bicyclohexanediol, decalindiol, cyclohexanedimethanol, and bicyclohexanedimethanol, epoxy resins derived from polyalkylene ether glycol such as polyethylene ether glycol, polyoxytrimethylene ether glycol, and polypropylene glycol, aromatic group-containing epoxy resins derived from Bisphenol A, Bisphenol F, Bisphenol S, Bisphenol B, Bisphenol C, Bisphenol K, Bisphenol AP, Bisphenol BP, Bisphenol E, Bisphenol P, Bisphenol PH, Bisphenol AD, Bisphenol AF, bisphenol fluoren, biscresol fluoren, Bisphenol Z, Bisphenol TMC, dimethylbisphenol A, tetramethylbisphenol A, dimethylbisphenol F, tetramethylbisphenol F, dimethylbisphenol S, tetramethylbisphenol S, tetramethylbisphenol Z, hydroquinone, resorcin, catechol, methylhydroquinone, dimethylhydroquinone, trimethylhydroquinone, butylhydroquinone, dibutylhydroquinone, methylresorcin, biphenol, tetramethylbiphenol, dihydroxynaphthalene, dihydroxymethylnaphthalene, dihydroxydiphenylether, dihydroxybenzophenone, dihydroxydiphenylsulfide, thiodiphenol, brominated bisphenol A, bisphenols obtained by a condensation reaction between monofunctional phenol and a compound having one aldehyde group, bisphenols obtained by a condensation reaction between monofunctional phenol and a compound having one carbonyl group, and so on, and so on. However, the divalent epoxy resin used in this embodiment is not limited to the above-described examples.

The preferred epoxy resin is a divalent epoxy resin derived from Bisphenol A, Bisphenol F, biphenol, or Bisphenol Z from the viewpoint of economical availability, transparency, and low melt viscosity.

Examples of the kind of the above-described curing agent include a polyamine-based curing agent and a modified product thereof, an acid anhydride-based curing agent, an imidazole-based curing agent, and so on. Examples of the polyamine-based curing agent include diaminodiphenylmethane, metaphenylenediamine, and diaminodiphenylsulfone. Examples of the acid anhydride-based curing agent include tetrahydrophthalic anhydride, hexahydrophthalic anhydride, methyltetrahydrophthalic anhydride, methylhexahydrophthalic anhydride, methyl nadic anhydride, hydrogenated methylnadic anhydride, trialkyltetrahydrophthalic anhydride, methylcyclohexene tetracarboxylic dianhydride, phthalic anhydride, trimellitic anhydride, pyromellitic anhydride, benzophenone tetracarboxylic dianhydride, ethylene glycol bis-anhydrotrimellitate, glycerin bis-monoacetate, dodecenyl succinic anhydride, aliphatic dibasic acid polyanhydride, and chlorendic anhydride. Examples of the imidazole-based curing agent include dicyandiamide, 2-methylimidazole, 2-ethyl-4-methylimidazole, 1-cyanoethyl-2-undecylimidazolium•trimellitate, epoxy-imidazole adduct, and so on. However, the curing agent that can be used in this embodiment is not limited to the above-described examples.

Further, examples of the kind of the above-described curing accelerator include an imidazole-based curing accelerator, a phosphorus-based curing accelerator, and so on.

Further, in this embodiment, various solvents can be used to adjust the viscosity of the resin. Examples of such a solvent include aliphatic hydrocarbons such as hexane, heptane, octane, decane, dimethylbutane, pentene, cyclohexane, and methylcyclohexane, ketone-based solvents such as acetone, methyl ethyl ketone, methyl isobutyl ketone, 2-heptanone, 4-heptanone, 2-octanone, cyclohexanone, and cyclopentanone, ether-based solvents such as dioxane, ethyl phenyl ether, ethyl benzyl ether, ethylene glycol dimethyl ether, ethylene glycol diethyl ether, and diethylene glycol dimethyl ether, cellosolve-based solvents such as methyl cellosolve and ethyl cellosolve, alkylene glycol monoalkyl ether acetate-based solvents such as methyl cellosolve acetate, ethyl cellosolve acetate, and propylene glycol monomethyl ether acetate, and various solvents such as dimethylformamide and dimethyl sulfoxide. Incidentally, the solvent that can be used for adjusting the viscosity is not limited to the above-described examples, and a plurality of solvents may be used in combination.

[Regarding the carbon reinforcing fiber]

As for the kind of the carbon reinforcing fiber, for example, either PAN-based carbon reinforcing fibers or pitch-based carbon reinforcing fiber can be used and can be selected according to the purpose or application, but from the

viewpoint of improving vibration damping properties, the pitch-based carbon reinforcing fibers are preferably used. Further, as the carbon reinforcing fiber, one kind of the above-described fibers may be used alone, or a plurality of kinds of them may be used in combination.

In the CFRP composite metal plate for vehicles 1 according to this embodiment, the carbon reinforcing fibers may be a cloth material with fiber bundles woven in a mesh pattern, but when controlling the orientation of the carbon reinforcing fibers, it is simpler to use a UD material with fiber bundles aligned in one direction.

Incidentally, the thickness of the fiber bundle of the carbon reinforcing fibers is not particularly specified, but is preferably set to about 1000 to 2000 μm, for example.

<Regarding the resin layer 203>

The resin layer 203 in the mixed resin layer 20 according to this embodiment is a layer that is located at least between any layers of the CFRP layers 201 or at the interface between the CFRP layer 201 and the metal plate 10 and contains a resin having a Young's modulus of less than 1.5 GPa and a loss coefficient of 0.01 or more, which is different from the matrix resin of the CFRP layer 201.

As a result of diligent studies conducted by the present inventors for the purpose of ensuring both the strength and rigidity and the vibration damping properties, they figured out that the mixed resin layer 20 to be formed into a composite with the metal plate 10 needs to be formed of the CFRP layer 201 and the resin layer 20 containing a resin having a Young's modulus of less than 1.5 GPa and a loss coefficient of 0.01 or more, which is different from the matrix resin.

When the Young's modulus of the resin forming the resin layer 20 exceeds 1.5 GPa, it is impossible to achieve the required vibration damping properties, resulting in failing to ensure both the strength and rigidity and the vibration damping properties. Further, when the loss coefficient of the resin forming the resin layer 20 is less than 0.01, it is impossible to achieve a desired vibration damping factor. It becomes possible to ensure both the strength and rigidity and the vibration damping properties only by forming the resin layer 20 using the resin having a Young's modulus of less than 1.5 GPa and a loss coefficient of 0.01 or more, which is different from the matrix resin.

In measuring the Young's modulus and the loss coefficient of the target resin, first, a storage elastic modulus E' and a loss coefficient are specified by measuring the DTMA curve of a target substance using a dynamic thermal mechanical analysis (Dynamic Thermal Mechanical Analysis) apparatus in accordance with JIS K7424. The obtained storage elastic modulus E' is almost the same as the elastic modulus (Young's modulus) of the material, and the Young's modulus can be measured by measuring the DTMA curve. Further, the loss coefficient (tan δ) can be expressed by the ratio (E"/E') of a loss elastic modulus E" and the obtained storage elastic modulus E'.

The measurement by the above-described dynamic thermal mechanical analysis apparatus is performed in a nitrogen gas stream, in a tensile mode, at 10 Hz, under a temperature rise condition of 3°C/min, and in a range of -100 to 200°C. As a test piece, there is used one made by spreading the resin before curing to a thickness of 0.5 mm, allowing it to stand for 24 hours at ordinary temperature to be cured, and then cutting it to a width of 10 mm, a length of 40 mm, and a thickness of 0.5 mm. In this embodiment, the Young's modulus and the loss coefficient at room temperature of 25°C are used.

Incidentally, the content of the resin having a Young's modulus of less than 1.5 GPa and a loss coefficient of 0.01 or more in the resin layer 203 is preferably 50 parts by mass or more with respect to 100 parts by mass of the entire resin component of the resin layer 203, a higher content is better, and the resin layer 203 may be formed of 100% resin having a Young's modulus of less than 1.5 GPa and a loss coefficient of 0.01 or more.

Further, the resin layer 203 may contain other resins as long as the resin having a Young's modulus of less than 1.5 GPa and a loss coefficient of 0.01 or more is contained (preferably the resin is contained at the above-described content ratio), and it may contain the matrix resin and the carbon reinforcing fibers such as those contained in the CFRP layer 201.

The Young's modulus of the resin forming the resin layer 203 is preferably 1.0 GPa or less and more preferably 0.5 GPa or less.

Further, the upper limit of the loss coefficient of the resin forming the resin layer 203 is not particularly specified, but is preferably about 2.00 or less from the viewpoint of heat generation because the vibration energy is converted into heat energy.

Examples of the resin having a Young's modulus of less than 1.5 GPa and a loss coefficient of 0.01 or more as described above include a thermoplastic polyester elastomer (Young's modulus: 0.08 GPa, loss coefficient: 0.057), a modified silicone resin (Young's modulus: 0.02 GPa, loss coefficient: 0.290), a polyolefin resin (Young's modulus: 1.38 GPa, loss coefficient: 0.047), a polyurethane resin (Young's modulus: 0.004 GPa, loss coefficient: 0.701), and so on, and among them, the thermoplastic polyester elastomer, the modified silicone resin, the polyurethane resin, or the polyester urethane resin (Young's modulus: 0.004 GPa, loss coefficient: 0.701) is preferably used.

Further, the ratio of the area of the resin layer 203 to the total area of the mixed resin layer 20 in a cross section

of the mixed resin layer 20 according to this embodiment when cut in the thickness direction is preferably 5% or more. By setting the ratio of the area of the resin layer 203 to the total area of the mixed resin layer 20 to 5% or more, both the rigidity and the vibration damping properties can be more reliably ensured. The ratio of the area of the resin layer 203 to the total area of the mixed resin layer 20 is more preferably 10% or more. On the other hand, when the ratio of the area of the resin layer 203 to the total area of the mixed resin layer 20 exceeds 60%, the strength of the entire CFRP composite metal plate for vehicles 1 may decrease because the resin will be destroyed before the strength of the CFRP to be originally exhibited is used up. Therefore, the ratio of the area of the resin layer 203 to the total area of the mixed resin layer 20 is preferably set to 60% or less. The ratio of the area of the resin layer 203 to the total area of the mixed resin layer 20 is more preferably 40% or less.

Here, regarding the calculation of the ratio of the area of the resin layer 203 to the total area of the mixed resin layer 20 as described above, a cross-section sample of the target mixed resin layer 20 is prepared, the thickness of this cross section is found by a scanning electron microscope (Scanning Electron Microscope: SEM), and the above area ratio can be calculated from the obtained entire thickness of the mixed resin layer 20 and the thickness of the resin layer 203. The area ratio to be obtained can be regarded as the content ratio (volume%) of the resin having a Young's modulus of less than 1.5 GPa and a loss coefficient of 0.01 or more in the mixed resin layer 20.

Further, when the resin having a Young's modulus of less than 1.5 GPa and a loss coefficient of 0.01 or more is dispersed in a certain resin, a phase image can be measured in a tapping mode with an atomic force microscope (Atomic Force Microscope: AFM) to find the area ratio of the dispersed resin. This area ratio can also be regarded as the content ratio (volume%) of the resin having a Young's modulus of less than 1.5 GPa and a loss coefficient of 0.01 or more in the mixed resin layer 20. Specifically, it is possible to find the content ratio by binarizing the obtained image, extracting only the dispersed resin portion, and taking the ratio of the extracted resin portion to the total area. As image analysis software used for data processing, the analysis software attached to the atomic force microscope may be used, or commercially available analysis software may be used.

Further, the position of the resin layer 203 in the mixed resin layer 20 may be at the middle portion of the mixed resin layer 20 as illustrated in FIG. 3A, or at the interface between the mixed resin layer 20 and the metal plate 10 as illustrated in FIG. 3B, but as illustrated in FIG. 3C, the resin layer 203 is preferably unevenly distributed between the layers of the CFRP layers 201 located between the middle portion and the interface. The resin layer 203 is unevenly distributed between the layers of the CFRP layers 201 located between the middle portion and the interface, thereby making it possible to more reliably achieve both the strength and rigidity and the vibration damping properties.

In this embodiment, the degree of uneven distribution of the resin layer 203 in the mixed resin layer 20 as described above is represented by an eccentricity ratio as will be explained below. This eccentricity ratio is defined with respect to the neutral plane in the CFRP composite metal plate for vehicles 1, as will be explained in detail below. Here, the neutral plane is a plane defined by connecting the points in the CFRP composite metal plate for vehicles 1, where neither a tensile stress nor a compressive stress is acting.

Such a neutral plane can be calculated based on the beam theory in structural mechanics. Specifically, the position of the neutral plane [NP] can be calculated based on a thickness $t_i$ (i: number of layers) of each of the layers forming the CFRP composite metal plate for vehicles 1, an elastic modulus $E_i$ of each layer, and the position of the middle plane of each layer. In the following, as an example, we will focus on the CFRP composite metal plate for vehicles 1 having a four-layer structure as illustrated in FIG. 4A and FIG. 4B.

First, the thickness $t_i$ (i = 1 to 4) of each layer as schematically illustrated in FIG. 4A can be found by SEM observation of the cross section. Further, the thickness $t_i$ of each layer is determined, thereby making it possible to determine the middle plane (position having a thickness of ti/2) of each layer as illustrated in FIG. 4B. After that, one end surface of the CFRP composite metal plate for vehicles 1 is set as a reference plane, and a separation distance $h_i$ between the middle plane of each layer and the reference plane is determined.

Further, the elastic modulus $E_i$ of each layer is determined. First, when the mixed resin layer 20 and the metal plate 10 are bonded, a heat treatment (baking for 24 hours at a temperature at which the resin of the CFRP layer 201, the resin layer 203, and the bonding resin layer 30 are decomposed (for example, 400°C)) is performed at an appropriate temperature, to thereby separate the metal plate 10 and the mixed resin layer 20 from each other, and then the elastic modulus of the metal plate 10 alone is measured. Further, from the change in mass at that time, the content ratio of the carbon reinforcing fibers contained in the CFRP layer is determined. Further, the carbon reinforcing fibers are taken out from the baked CFRP layer 201, and the elastic modulus of the carbon reinforcing fibers is calculated from a tensile test result of the carbon reinforcing fibers alone. The elastic modulus of the CFRP layer 201 can be calculated from the elastic modulus and the content ratio of the carbon reinforcing fibers.

Further, regarding the elastic modulus of the resin layer 203, the force curve, which is an AFM measurement technique, is first measured on a separately prepared sample of the resin layer 203 using a probe with a known spring constant having a curvature radius of 6 to 15 nm, for example. By giving a constant frequency to the sample from the probe during the force curve measurement, the storage elastic modulus (E'), the loss elastic modulus (E"), and the loss coefficient tanδ (E"/E) are calculated as a dynamic viscoelastic model. Thereby, the elastic modulus of the resin layer

203 can be determined.

The separation distance from the reference plane to the neutral plane [NP] can be calculated based on the following equation (1) using the elastic modulus $E_i$ of each layer, a depth width $B_i$ of each layer (to be handled as $B_i$ = 1 basically), the thickness $t_i$ of each layer, and the separation distance $h_i$ between the middle plane of each layer and the reference plane. Incidentally, in the following equation (1), i is a parameter relating to the number of layers, and n is the number of layers of the target CFRP composite metal plate for vehicles 1. Further, the position of such a neutral plane can be calculated for any of the CFRP composite metal plates for vehicles having the layer structures as illustrated in FIG. 1A to FIG. 1C.

[Mathematical equation 1]

$$[\mathrm{NP}] = \frac{\sum_{i=1}^{n} E_i B_i h_i t_i}{\sum_{i=1}^{n} E_i B_i t_i}$$

...Equation (1)

Here, as schematically illustrated in FIG. 5, the separation distance from the obtained position of the neutral plane to the middle plane of the resin layer 203 is set to Li, and the separation distance from the position of the neutral plane to the end surface of the mixed resin layer 20 across the resin layer 203 is set to $L_2$. In this case, a target eccentricity ratio Ec in this embodiment can be calculated by the following equation (2).

$$\mathrm{Ec} = (L_1/L_2) \times 100(\%) \quad \text{...Equation (2)}$$

In the mixed resin layer 20 according to this embodiment, the resin layer 203 may be present on the side close to the neutral plane defined as above, or the middle plane of the resin layer 203 may coincide with the neutral plane (in other words, Ec = 0% may be established). In this case, the eccentricity ratio Ec expressed by the above-described equation (2) comes to exhibit a relatively small value. The presence of the resin layer 203 on the side close to the neutral plane makes it possible to further improve the vibration damping properties of the mixed resin layer 20.

Further, in the mixed resin layer 20 according to this embodiment, the eccentricity ratio Ec defined as above is preferably 5% or more and 65% or less. The eccentricity ratio Ec being 5% or more makes it possible to more reliably use the vibration damping properties of CFRP and more reliably ensure the vibration damping properties. The eccentricity ratio Ec is more preferably 10% or more and further preferably 20% or more. On the other hand, the eccentricity ratio Ec being 65% or less makes it possible to more reliably use the strength and rigidity of CFRP and more reliably ensure the strength and rigidity. The eccentricity ratio Ec is more preferably 50% or less and further preferably 40% or less.

(Regarding a drawing direction of the carbon reinforcing fibers)

Next, with reference to FIG. 6 and FIG. 7, there is explained in detail a drawing direction of the carbon reinforcing fibers (in more detail, the drawing direction of the fiber bundle of the carbon reinforcing fibers) in the CFRP composite metal plate for vehicles 1 according to this embodiment. FIG. 6 and FIG. 7 are explanatory views for explaining the drawing direction of the carbon reinforcing fibers in the CFRP composite metal plate for vehicles 1 according to this embodiment.

When various kinds of panels molded for vehicles are installed in a vehicle, it is common for the metal plate used in the installed panels to have a shape curved in a certain direction. For example, when an attempt is made to manufacture a panel for vehicles using a thin steel plate as a metal plate for weight reduction, the curved shape portion lacks the rigidity in the vertical direction. Therefore, laminating a unidirectional CFRP to the panel for vehicles for stiffening is considered.

However, the CFRP does not have a sufficient vibration damping ratio only with the unidirectional fiber orientation. Further, although there is a possibility that the vibration damping properties may be enhanced by introducing a predetermined warp or the like into the metal plate along the vertical direction, such a shape control alone sometimes makes it difficult to sufficiently improve the vibration damping ratio of bending elasticity in the metal plate because the vibration damping properties of the material itself are low. Therefore, in order to dampen vibrations transmitted from all directions, in addition to the orientation of fibers only in the vertical direction, it is important to orient the fibers in the other directions. This makes it possible to improve the vibration damping ratio of bending elasticity while ensuring the

anisotropy and bending rigidity of the mechanical properties in the metal plate, resulting in that it becomes possible to improve the rigidity and vibration damping properties and achieve the weight reduction while suppressing the increase in cost.

Thus, in the CFRP composite metal plate for vehicles 1 according to this embodiment, the drawing direction of the carbon reinforcing fibers in the mixed resin layer 20 is controlled so that the drawing direction of the carbon reinforcing fibers in the mixed resin layer 20 satisfies the conditions to be explained below.

Here, as schematically illustrated in FIG. 6, the direction that is a principal curvature direction when molded into a panel for vehicles is defined as a 0° direction, and the direction orthogonal to this 0° direction is defined as a 90° direction. Then, regarding the drawing direction of the carbon reinforcing fibers contained in the mixed resin layer 20, it is considered to calculate a 0° direction component and a 90° direction component each, using trigonometric functions.

Here, from the viewpoint of vibration damping properties, in the mixed resin layer 20 according to this embodiment, the upper limit value of the ratio of the 0° direction component (in the principal curvature direction of the panel for vehicles) in the drawing direction of the carbon reinforcing fibers contained in the entire mixed resin layer 20 is not particularly limited and may be 100% or 90% or less. Even when the ratio of the 0° direction component in the mixed resin layer 20 is 100%, it is possible to exhibit good vibration damping properties and isotropically dampen the vibrations input to the panel for vehicles. This is because the mixed resin layer 20 according to this embodiment includes the resin layer 203 containing the resin having a specific Young's modulus and loss coefficient.

However, from the viewpoint of more reliably ensuring the strength and rigidity, the ratio of the 0° direction component is preferably 20% or more. The ratio of the 0° direction component is set to 20% or more, thereby making it possible to more reliably ensure the strength and rigidity while achieving good vibration damping properties.

Here, the drawing direction of the carbon reinforcing fibers in the mixed resin layer 20 can be measured using a three-dimensional X-ray microscope system (X-ray CT). That is, for example, using an Xradia 520 manufactured by ZEISS, an X-ray CT image of the mixed resin layer 20 is acquired, and the drawing direction of the carbon reinforcing fibers can be found from the three-dimensional image obtained by reconstructing the image. Further, the reconstructed image can be analyzed to calculate the ratio of the 0° direction component and the 90° direction component in the drawing direction of the carbon reinforcing fibers. Hereinafter, there is explained the method of calculating the 0° direction component and the 90° direction component in detail with reference to FIG. 7.

In this embodiment, the ratio of the 0° direction component (a component parallel to the maximum principal curvature direction of the panel for vehicles) is calculated as follows. There is explained an example where the drawing directions of two kinds of fibers are included in the entire the mixed resin layer 20 formed into a composite in the panel for vehicles below. First, a first drawing direction having an angle (acute angle) $\theta_1$ made with the 0° direction and a second drawing direction having an angle (acute angle) $\theta_2$ made with the 0° direction, which are as illustrated in FIG. 7, are each decomposed into the 0° direction component and the 90° direction component using the trigonometric functions, and the absolute value of the values of the 0° direction components at the respective thickness positions of the mixed resin layer 20 and the absolute value of the values of the 90° direction components at the respective thickness positions of the mixed resin layer 20 are calculated.

Then, by summing (integrating) the 0° direction components at the respective thickness positions along the thickness direction of the mixed resin layer 20, the value of the 0° direction component in the entire mixed resin layer 20 is calculated. Similarly, by summing (integrating) the 90° direction components at the respective thickness positions along the thickness direction of the mixed resin layer 20, the value of the 90° direction component in the entire mixed resin layer 20 is calculated. Then, the value of the 0° direction component and the value of the 90° direction component in the entire mixed resin layer 20 calculated here are further summed, and the ratio of the 0° direction component in the entire mixed resin layer 20 to the sum of the values is calculated.

Incidentally, the mixed resin layer 20 has a laminated structure in which a plurality of CFRP layers are laminated, and thus, the 0° direction component and the 90° direction component at each thickness position described above can be considered as the 0° component and the 90° component per layer.

For example, it is assumed that the mixed resin layer 20 has a laminated structure composed of six CFRP layers. At this time, for example, when the angle $\theta_1$ is 30°, cos30° is the 0° direction component and sin30° is the 90° direction component. That is, the 0° direction component per layer is about 0.866, and the 90° direction component per layer is 0.5. When the CFRP layer 20 has a six-layer structure, the 0° direction component in the entire layer is 5.2 and the 90° direction component is 3.0. The value of 5.2, which is the value of the 0° direction component in the entire mixed resin layer 20, is about 63% of 8.2, which is the sum of the values of the 0° direction component and the 90° direction component in the entire mixed resin layer 20, and this is the ratio of the 0° direction component in the entire mixed resin layer 20. Incidentally, the value of the 0° direction component when the drawing direction is the 0° direction is cos0°, namely 1, and the value of the 90° direction component is sin0°, namely 0. Further, the value of the 0° direction component when the drawing direction is the 90° direction is cos90°, namely, 0, and the value of the 90° direction component is sin90°, namely, 1.

Incidentally, when the layers of the mixed resin layer 20 having a laminated structure are each formed to have

substantially the same thickness, the above-described ratio can be calculated by the above-described method, but when the thicknesses of the respective layers are different, the above-described ratio is calculated with the thickness of each layer set as a weight. For example, when the value of the 0° direction component of the kth layer from the bonding side (side of the interface with the metal plate 10) of the mixed resin layer 20 in which n layers are laminated is set to $x_k$ and the thickness of such a layer is set to $t_k$, the sum of the values of the 0° direction components in the entire mixed resin layer 20 is $x_1 \times t_1 + \cdots + x_n \times t_n$. The sum of the values of the 90° direction components can also be calculated in the same manner.

(Regarding the bonding resin layer 30)

The bonding resin layer 30 illustrated in FIG. 2 is provided as needed and is interposed between the metal plate 10 and the mixed resin layer 20 of the CFRP composite metal plate for vehicles 1 or between the second metal plate 15 and the mixed resin layer 20 to bond the metal plate 10 or second metal plate 15 and the mixed resin layer 20.

Here, the resin composition forming the bonding resin layer 30 may be a composition made of a thermosetting resin or a composition made of a thermoplastic resin, but the resin composition is preferably formed of a resin composition made of the same kind of resin as the matrix resin of the mixed resin layer 20 and more preferably formed of a resin composition made of the same resin. The matrix resin of the mixed resin layer 20 and the bonding resin layer 30 are formed of a resin composition made of at least the same kind of resin, and thereby, the adhesiveness of the metal plate 10 or the second metal plate 15 to the mixed resin layer 20 via the bonding resin layer 30 is made strong, thereby making it possible to increase the mechanical strength of the entire CFRP composite metal plate for vehicles 1. Incidentally, the kinds, physical properties, and the like of the resin forming the bonding resin layer 30 are the same as those of the above-described matrix resin, and thus their detailed explanations are omitted.

Further, the bonding resin layer 30 according to this embodiment may be formed of the resin exuded to the interface portion with the metal plate 10 or the second metal plate 15 during the process where the mixed resin layer 20 is formed, or the bonding resin layer 30 may be formed by placing a resin sheet or applying a resin composition such as an adhesive between a precursor of the mixed resin layer 20 and the metal plate 10 or the second metal plate 15, or another method.

Here, when the thickness of the bonding resin layer 30 is too thick, it may be difficult to obtain synergistic effects between the various properties exhibited by the mixed resin layer 20 and the metal plate 10 or the second metal plate 15. Therefore, when the bonding resin layer 30 is provided, the thickness of the bonding resin layer 30 is preferably set to greater than 0 mm and 2.0 mm or less. When the bonding resin layer 30 is provided, the thickness of the bonding resin layer 30 is more preferably 0.2 mm or more and 1.0 mm or less.

<Regarding the relationship between the thicknesses of the metal plate 10, the second metal plate 15 and the thickness of the mixed resin layer 20>

In the CFRP composite metal plate for vehicles according to this embodiment, the entire thickness of the CFRP composite metal plate for vehicles 1 ($d_1 + d_2$ in FIG. 1A, $d_1 + 2d_2$ in FIG. 1B, $d_1 + d_2 + d_3$ in FIG. 1C) is preferably within a range of 0.40 mm or more and 3.00 mm or less, and the ratio ($d_1/d_2$) of the thickness $d_1$ of the steel plate to the thickness $d_2$ of the mixed resin layer 20 is preferably 0.10 or more and 4.00 or less. The entire thickness of the CFRP composite metal plate for vehicles 1 is 0.40 mm or more and 3.00 mm or less and the thickness ratio ($d_1/d_2$) is 0.10 or more and 4.00 or less, and thereby it becomes possible to more reliably improve the vibration damping ratio of bending elasticity while ensuring the anisotropy and bending rigidity of the mechanical properties in the metal plate 10, resulting in that it becomes possible to more reliably improve the rigidity and vibration damping properties and achieve the weight reduction while suppressing the increase in cost.

Here, when the mixed resin layer 20 is provided on both surfaces of the metal plate 10 as illustrated in FIG. 1B, as for the thickness ratio ($d_1/d_2$), the value calculated by ($d_1/2 \times d_2$) is used specifically, and when the metal plate 10 and the second metal plate 15 are provided on both surfaces of the mixed resin layer 20, as illustrated in FIG. 1C, as for the thickness ratio ($d_1/d_2$), the value calculated by (($d_1 + d_3$)/$d_2$) is used specifically.

The entire thickness of the CFRP composite metal plate for vehicles 1 is more preferably 0.50 mm or more and 1.50 mm or less, and the thickness ratio ($d_1/d_2$) is more preferably 0.25 or more and 2.00 or less.

Here, there is briefly explained a method of measuring the metal plate 10 and the CFRP layer 20 in the CFRP composite metal plate for vehicles door panel 1 according to this embodiment with reference to FIG. 6. FIG. 8 is an explanatory view for explaining the method of measuring a thickness.

The thicknesses of the metal plate 10, the second metal plate 15, the mixed resin layer 20, and the bonding resin layer 30 can be measured according to a cross-sectional method of an optical method in JIS K 5600-1-7, Section 5.4, as follows, for example. That is, a room-temperature curing resin that can be embedded with no gaps without harmful effects on a sample is used, a low viscosity Epo Mount 27-777 manufactured by Refine Tec Ltd. is used as a main agent,

a 27-772 is used as a curing agent, and the sample is embedded. The sample is cut at a point to be observed by using a cutting machine to be parallel to the thickness direction to expose a cross section, and the exposed cross section is polished using an abrasive paper with a grit specified in JIS R 6252 or 6253 (for example, 280 grit, 400 grit, or 600 grit) to form an observation surface. When an abrasive material is used, the cross section is polished by using diamond paste or similar paste of appropriate grade to form the observation surface. Further, as necessary, buffing may also be performed to smooth the surface of the sample to a condition that is acceptable for observation.

A microscope with an illumination system appropriate for providing optimal image contrast, which is capable of measuring with an accuracy of 1 μm, (for example, BX51 manufactured by Olympus Corporation, or the like) is used, and the size of a field of view is selected to be 300 μm. Incidentally, the size of the field of view may be changed so that respective thicknesses can be checked. For example, when the thickness of the CFRP layer 20 is measured, the field of view to be observed is divided into four equal parts as illustrated in FIG. 8, the thickness of the mixed resin layer 20 is measured at the middle in the width direction of each of the fractional points, and an average thickness of the thicknesses is used as the thickness in that field of view. This field of view to be observed is measured by selecting five different points, dividing the field of view to be observed into four equal parts, measuring the thickness at each of the fractions, and calculating the average value of the measurements. For adjacent fields of view to be observed, they should be selected at a distance of 3 cm or more apart from each other. The value resulting from further averaging the average values at these five points can be set as the thickness of the mixed resin layer 20. Further, the thicknesses of the metal plate 10 and the second metal plate 15 and the thickness of the bonding resin layer 30 can be measured in the same manner as the thickness of the above-described mixed resin layer 20.

(Regarding a projected area of the mixed resin layer 20)

Next, there is explained a projected area of the mixed resin layer 20 with reference to FIG. 6 again.

In the CFRP composite metal plate for vehicles 1 according to this embodiment, when the CFRP composite metal plate for vehicles 1 is viewed from above in the thickness direction (above on the negative direction side of the z axis in FIG. 6), a ratio of a projected area of the metal plate 10 to a projected area of the mixed resin layer 20 (projected area to the xy-plane in FIG. 6) (metal plate/mixed resin layer ratio) is preferably 1.0 or more and 20.0 or less. The projected area ratio is 1.0 or more and 20.0 or less, which makes it possible to more reliably improve the vibration damping ratio of bending elasticity while ensuring the anisotropy and bending rigidity of the mechanical properties in the metal plate 10, resulting in that it becomes possible to more reliably improve the rigidity and vibration damping properties and achieve the weight reduction while suppressing the increase in cost. The projected area ratio is more preferably 1.5 or more and 10.0 or less.

Here, it can also be considered that when using the CFRP composite metal plate for vehicles 1 to manufacture the panel for vehicles, an opening is provided, like the door panel for vehicles, for example. At this time, in the manufactured panel for vehicles, the region that affects the mechanical properties is a portion other than the opening, and thus, when the manufactured panel for vehicles has a portion that will later be an opening, in the above-described projected area ratio, the projected area of the metal plate 10 is set to the projected area of the metal plate 10 excluding the opening.

Incidentally, as illustrated in FIG. 1B, when the mixed resin layer 20 is provided on both surfaces of the metal plate 10, the projected area of the mixed resin layer 20 in the above-described projected area ratio results in the total value of the projected areas of the mixed resin layers 20 located on both surfaces of the metal plate 10.

Here, regarding the projected area of the metal plate 10 and the projected area of the mixed resin layer 20, the shape of the target panel for vehicles is measured by a 3D shape measuring device such as VR3050 manufactured by KEYENCE CORPORATION, and the projected area of only the mixed resin layer 20 is calculated. Then, the projected area of the mixed resin layer 20 is subtracted from the entire area, thereby making it possible to calculate the projected area of the metal plate 10.

(Regarding an installation position of the mixed resin layer 20)

Then, there is explained an installation position of the mixed resin layer 20 in the CFRP composite metal plate for vehicles 1 according to this embodiment with reference to FIG. 9A to FIG. 9C. FIG. 9A to FIG. 9C each are an explanatory view for explaining the installation position of the mixed resin layer in the CFRP composite metal plate for vehicles according to this embodiment.

In the CFRP composite metal plate for vehicles 1 according to this embodiment, the installation position of the mixed resin layer 20 on the surface of the metal plate 10 is not particularly limited, and the mixed resin layer 20 can be installed at an arbitrary position. However, considering the outer shape of the manufactured panel for vehicles and the like, the mixed resin layer 20 is preferably installed at a position that is considered to affect the vibration properties of the panel when the CFRP composite metal plate for vehicles 1 becomes the panel for vehicles.

As the position that can affect the vibration properties when the CFRP composite metal plate for vehicles 1

becomes the panel for vehicles, corner portions of the metal plate 10 are considered as illustrated in FIG. 9A, for example. FIG. 9A schematically illustrates the case where the mixed resin layer 20 is provided on four corner portions of the metal plate 10, but the corner portion on which the mixed resin layer 20 is provided may be at least one corner portion of the metal plate 10. Further, as illustrated in FIG. 9B, for example, the mixed resin layer 20 may be provided on a substantially center portion of the metal plate 10, or as illustrated in FIG. 9C, for example, the mixed resin layer 20 may be provided on at least one corner portion and the substantially center portion of the metal plate 10.

The CFRP composite metal plate for vehicles 1 according to this embodiment has been explained in detail with reference to FIG. 1A to FIG. 9C. Incidentally, the CFRP composite metal plate for vehicles 1 according to this embodiment as explained above can be used for a door outer panel, a roof panel, a hood, a fender, or a side outer panel of an automobile.

(Regarding the panel for vehicles)

The CFRP composite metal plate for vehicles 1 according to this embodiment, as explained above, can be used to manufacture various kinds of panels for vehicles by applying various processing methods, such as, for example, a hot pressing method. Examples of such a panel for vehicles include a door outer panel, a roof panel, a hood, a fender, a side outer panel of an automobile, and so on as illustrated in FIG. 10.

(Regarding a manufacturing method of the CFRP composite metal plate for vehicles)

Next, there is briefly explained a manufacturing method of the CFRP composite metal plate for vehicles 1 according to this embodiment with reference to FIG. 11. FIG. 11 is an explanatory view for explaining one example of the manufacturing method of the CFRP composite metal plate for vehicles according to this embodiment.

In the manufacturing method of the CFRP composite metal plate for vehicles 1 according to this embodiment, as schematically illustrated in FIG. 11, for example, a resin sheet, an adhesive, or the like, which will later be the bonding resin layer 30, is arranged on the surface of the metal plate 10 as necessary, and then, there is arranged thereon a laminated body 29 in which CFRPs (for example, CFRP prepregs 25) and a resin sheet 27 containing a resin having a Young's modulus of less than 1.5 GPa and a loss coefficient of 0.01 or more are laminated to be in a laminated state having a desired thickness. Then, at a treatment temperature up to a temperature 170°C higher than the glass transition temperature of the matrix resin of the CFRP prepreg 25 or the resin contained in the resin sheet 27, or a temperature 50°C higher than the melting point, the metal plate 10 and the laminated body 29 are thermocompression bonded.

Thereby, a composite of the metal plate 10 and the laminated body 29 is formed to be the CFRP composite metal plate for vehicles 1 including the metal plate 10 and the mixed resin layer 20.

<Regarding composite formation with the metal plate 10>

Incidentally, composite formation of the metal plate 10 and the laminated body 29 is performed by preparing the laminated body 29 having such a configuration as illustrated in FIG. 11 and installing the obtained laminated body 29 in a pressure molding machine to perform pressure molding, which is preferable from the viewpoint of cost. Further, after the laminated body is molded as CFRP, a composite of an adhesive that cures at ordinary temperature and the steel plate may be formed.

[Regarding thermocompression bonding conditions]

In the manufacturing method as explained above, the thermocompression bonding conditions for composite formation are as follows.

When the matrix resin of the CFRP prepreg 25 or the resin contained in the resin sheet 27 is an amorphous resin or a polymer alloy of an amorphous resin as described above, the thermocompression bonding temperature is preferably set to fall within a range of a glass transition temperature Tg of the amorphous resin to the glass transition temperature Tg + 170°C, and when the matrix resin of the CFRP prepreg 25 or the resin contained in the resin sheet 27 is a crystalline resin or a polymer alloy of a crystalline resin, the thermocompression bonding temperature is preferably set to fall within a range of a melting point MP of the crystalline resin to the melting point MP + 50°C. When the thermocompression bonding temperature exceeds the upper limit temperature, excessive heat is applied, which may cause decomposition of the resin, and when the temperature is lower than the lower limit temperature, the CFRP prepreg 25 may have poor adherability to the carbon reinforcing fibers and poor impregnation of the reinforcing fiber base therewith because the melt viscosity of the resin is high.

Incidentally, the crystalline resin is a resin whose melting point Tm is observed when the melting point is measured using a differential scanning calorimetry (Differential Scanning Calorimetry (DSC). The amorphous resin is a resin in which no exothermic peak associated with crystallization is observed and only the glass transition temperature

Tg is observed when the melting point is measured using a differential scanning calorimetry.

The pressure at which the thermocompression bonding is performed is, for example, preferably 3 MPa or more and more preferably within a range of 3 MPa or more and 5 MPa or less. When the pressure exceeds the upper limit, an excessive pressure is applied, which may cause deformation or damage, and when the pressure is lower than the lower limit, the impregnation of the reinforcing fiber base with the CFRP prepreg 25 becomes poor.

As for the thermocompression bonding time, a time period of at least 3 minutes or more is sufficient for the thermocompression bonding, and it is preferably within a range of 5 minutes or more and 20 minutes or less.

Such batch molding as described above is preferably performed by hot pressing, but it is also possible to quickly install the material preheated to a predetermined temperature in a low-temperature pressure molding machine for processing.

[Regarding an additional heating step]

In such a manufacturing method, when a crosslinkable adhesive resin composition containing the crosslinking curable resin (B) and the crosslinking agent (C) in the phenoxy resin (A) is used as the raw resin to form the matrix resin, an additional heating step can further be included.

When the crosslinkable adhesive resin composition is used, with a cured product in a first cured state (solidified product) that has solidified but has not been crosslinked (cured) in the above-described thermocompression bonding step, the CFRP layer 20 containing the matrix resin made of the cured product in a first cured state (solidified product) can be formed.

Thus, through the above-described thermocompression bonding step, an intermediate (preform) of the CFRP composite metal plate for vehicles 1 can be fabricated, in which the metal plate 10 and the laminated body containing CFRP made of the cured product in a first cured state (solidified product) are integrated. Then, by further performing an additional heating step on this intermediate after the thermocompression bonding step, the CFRP made of at least the cured product in a first cured state (solidified product) is subjected to a postcure to crosslink and cure the resin, which can be changed to a cured product in a second cured state (crosslinked cured product).

The additional heating step for the postcure is preferably performed at a temperature within a range of 200°C or more and 250°C or less over a time period of about 30 minutes to 60 minutes, for example. Incidentally, in place of the postcure, a thermal history in a post-step such as painting may be used.

As described above, when the crosslinkable adhesive resin composition is used, Tg after crosslinking and curing is greatly improved as compared to the phenoxy resin (A) alone. Therefore, Tg changes before and after the additional heating step is performed on the above-described intermediate, namely, in the process of the resin changing from the cured product in a first cured state (solidified product) to the cured product in a second cured state (crosslinked cured product). Specifically, Tg of the resin in the intermediate before crosslinking is, for example, 150°C or less, while Tg of the crosslinked resin after the additional heating step is improved within a range of, for example, 160°C or more and preferably 170°C or more and 220°C or less, thus making it possible to significantly increase the heat resistance.

[Regarding a pretreatment step]

When manufacturing the CFRP composite metal plate for vehicles 1, as a pretreatment step, it is preferable to degrease the metal plate 10 and it is more preferable to perform a mold release process on a mold and remove adhering matters (remove dust) on the surface of the metal plate 10. Except for steel plates having very high adhesion such as TFS (Tin Free Steel), the metal plate 10 that is usually considered to have a rust-preventive oil or the like adhering thereto is preferably degreased to restore the adhesion strength. Whether or not the degreasing is required can be determined by bonding the target metal plate to the target CFRP to be integrated without a degreasing step beforehand and checking whether sufficient adhesiveness can be obtained.

[Regarding a post-step]

In a post-step on the CFRP composite metal plate for vehicles 1, in addition to the painting, drilling, application of an adhesive for adhesive bonding, and the like are performed for mechanical bonding with other members by bolting, riveting, or the like, or other reasons.

[Regarding a manufacturing method of CFRP or CFRP prepreg]

Here, there is explained a manufacturing method of the CFRP or CFRP prepreg 25 to be used when forming the laminated body 29.

In the CFRP or CFRP prepreg 25 used when forming the laminated body 29, as the reinforcing fiber base that

will later be the carbon reinforcing fibers, for example, a nonwoven fabric base using chopped fibers, a unidirectional reinforcing fiber base using continuous fibers (UD material), or the like can be used, but it is preferable to use the UD material from the aspect of reinforcement effect and simplicity of orientation control.

As the CFRP or CFRP prepreg 25, it is preferable to use a prepreg formed by using a powder coating method rather than use a prepreg formed by a conventionally known method such as a wet melt or film stack method. The prepreg formed by the powder coating method has good drapeability because the reinforcing fiber base is impregnated with the resin in the form of fine particles, and the prepreg can follow an adherend even when the adherend has a complicated shape, and therefore, the prepreg is suitable for batch molding and hot pressing.

Examples of the main method of the powder coating method include an electrostatic coating method, a fluidized bed method, a suspension method, and so on, and any method can be appropriately selected depending on the kind of the reinforcing fiber base or the kind of the matrix resin. Among them, the electrostatic coating method and the fluidized bed method are preferable because they are a method suitable for the thermoplastic resins and have simple steps and good productivity. Particularly, the electrostatic coating method is the most suitable method because it is excellent in uniformity of the adhesion of the adhesive resin composition to the reinforcing fiber base.

In the case of performing powder coating of the adhesive resin composition that will later be the matrix resin when forming the CFRP or CFRP prepreg 25, it is preferable to obtain a prepreg by making the adhesive resin composition containing the above-described phenoxy resin (A) into a fine powder and attaching the fine powder to the reinforcing fiber base by powder coating.

For fine pulverization of the adhesive resin composition containing the phenoxy resin (A), for example, a pulverizing and mixing machine such as a low-temperature drying pulverizer (centrifugal force dryer add mill) can be used, but this embodiment is not limited to this. In addition, when the adhesive resin composition for the matrix resin is pulverized, the components of the adhesive resin composition each may be pulverized and then mixed, or the respective components may be blended in advance and then pulverized. In this case, it is preferable to set the pulverization conditions so that each fine powder has a later-described average particle diameter. The fine powder obtained in this manner has an average particle diameter within a range of 10 $\mu$m or more and 100 $\mu$m or less, preferably within a range of 40 $\mu$m or more and 80 $\mu$m, and more preferably within a range of 40 $\mu$m or more and 50 $\mu$m or less. By setting the average particle diameter to 100 $\mu$m or less, the energy generated when the adhesive resin composition collides with the fibers can be reduced and the adhesion efficiency of the adhesive resin composition to the reinforcing fiber base can be increased in powder coating in an electrostatic field. Further, by setting the average particle diameter to 10 $\mu$m or more, the particles can be prevented from scattering due to the accompanying airflow, to suppress a decrease in the adhesion efficiency and also prevent the resin fine powder floating in the air from causing deterioration of the work environment.

When performing powder coating of the crosslinkable adhesive resin composition, which is made by blending the crosslinking curable resin (B) and the crosslinking agent (C) with the phenoxy resin (A), as the adhesive resin composition for forming the CFRP or CFRP prepreg 25, the average particle diameters of the fine powder of the phenoxy resin (A) and the fine powder of the crosslinking curable resin (B) are preferably within a range of 1 to 1.5 times the average particle diameter of the fine powder of the crosslinking agent (C). By setting the particle diameter of the fine powder of the crosslinking agent (C) to equal to or less than the particle diameters of the fine powders of the phenoxy resin (A) and the crosslinking curable resin (B), the crosslinking agent (C) enters the inside of the reinforcing fiber base to adhere to the reinforcing fiber material. Further, the crosslinking agent (C) is evenly distributed around the particles of the phenoxy resin (A) and the particles of the crosslinking curable resin (B), therefore reliably promoting the crosslinking reaction.

In the powder coating for forming the CFRP or CFRP prepreg 25, the coating is preferably performed so as to make the amount of adhesion of the adhesive resin composition, which will later be the matrix resin, to the reinforcing fiber base (resin ratio: RC) fall within a range of, for example, 20% or more and 50% or less. RC is more preferably within a range of 25% or more and 45% or less, and further preferably within a range of 25% or more and 40% or less. Setting RC to 50% or less makes it possible to prevent the mechanical properties such as tension and a bending elastic modulus of FRP from decreasing. Further, by setting RC to 20% or more, the required adhesion amount of the resin can be ensured, resulting in that the impregnation of the reinforcing fiber base with the matrix resin is made sufficient and the thermophysical and mechanical properties can be improved.

The fine powder of the applied adhesive resin composition (that will later be the matrix resin) is fixed to the reinforcing fiber base by heating and melting. In this case, the powder may be applied to the reinforcing fiber base and then heated to be fused, or the powder may be applied to the previously heated reinforcing fiber base, to thereby be fused simultaneously with applying the fine powder of the adhesive resin composition to the reinforcing fiber base. By heating and melting the fine powder of the adhesive resin composition on the surface of the reinforcing fiber base in this manner, the adhesion to the reinforcing fiber base can be improved, to prevent the fine powder of the applied adhesive resin composition from falling off. However, at this stage, the adhesive resin composition that will later be the matrix resin concentrates on the surface of the reinforcing fiber base and does not spread to the inside of the reinforcing fiber base like a molded body after heating and pressure molding. Incidentally, the heating time for fusing the adhesive resin

composition after powder coating is not particularly limited, but is usually 1 to 2 minutes. The melting temperature is within a range of 150 to 240°C, preferably within a range of 160 to 220°C, and more preferably within a range of 180 to 200°C. When the melting temperature exceeds the upper limit, the curing reaction may proceed, and when the melting temperature falls below the lower limit, the thermal fusion may become insufficient, and falling off of the fine powder of the adhesive resin composition, falling, or the like may occur during handling operations.

The manufacturing method of the CFRP composite metal plate for vehicles 1 according to this embodiment has been explained in detail above.

[Example]

In the following, the CFRP composite metal plate for vehicles according to the present invention will be specifically explained with reference to examples and comparative examples. Incidentally, the examples to be explained below are only one example of the CFRP composite metal plate for vehicles according to the present invention, and the CFRP composite metal plate for vehicles according to the present invention is not limited to the following examples.

[Metal plate]

The following metal member was used as the metal plate. Incidentally, the following metal member was used after being degreased thoroughly with acetone.

A 590-MPa high-tensile steel plate with a thickness of 0.4 mm, which was GA plated (alloyed hot-dip galvanized steel plate) manufactured by NIPPON STEEL CORPORATION

[Fabrication of CFRP prepreg]

An epoxy resin composition was prepared as the thermosetting resin that will later be the matrix resin. A reinforcing fiber base made of pitch-based carbon fibers (UD material: manufactured by Nippon Graphite Fiber Corporation) was impregnated with this epoxy resin composition to form an epoxy resin CFRP prepreg.

[Resin sheet]

As the resin sheet that will later be the resin layer in the mixed resin layer, a Hytrel sheet (150 μm, manufactured by DU PONT-TORAY CO., LTD.), a polypropylene sheet (180 μm, manufactured by Mitsui Chemicals, Inc.), a modified silicone adhesive (200 μm, manufactured by CEMEDINE CO., LTD.), and a polyester urethane resin (200 μm, manufactured by TOYOBO CO., LTD.) were used. Further, for comparison, a PET sheet (100 μm, manufactured by Toray Industries, Inc.) was also prepared.

Of each of the used resin sheets, the Young modulus and the loss coefficient at 25°C were measured according to the above-described method by using a dynamic mechanical analyzer (DMA7100 manufactured by Hitachi High-Tech Science Corporation) in accordance with JIS K7244. Obtained results are illustrated in Table 1 below.

[CFRP molding]

The fabricated CFRP prepreg and the resin sheet were laminated to have a desired thickness with a desired laminated structure and molded in an autoclave to form a mixed resin layer. In more detail, they were molded by holding them at 130°C for 2 hours while applying 4 atmospheres in the autoclave.

The obtained mixed resin layer was bonded to the steel plate using a room-temperature curing epoxy resin High-super 30 (manufactured by CEMEDINE CO., LTD.).

The obtained CFRP composite steel plate was evaluated in terms of vibration damping properties and strength and rigidity. The evaluation methods are as follows.

0 Evaluation of vibration damping properties

The end of the obtained CFRP composite steel plate was suspended and supported at one point, and a sample was vibrated using an impulse hammer (GK-2110 manufactured by ONOSOKKI). As the vibration point, 35 points in the out-of-plane direction of the sample were set, and as the response (measurement) point, 2 points in the out-of-plane direction were set. Acceleration was measured at the response points using an accelerometer NP-3211 manufactured by ONOSOKKI. The frequency response function from the two response points was measured with an FFT analyzer DS-3204 manufactured by ONOSOKKI to be used for a vibration mode analysis. The frequency response function at each vibration point was subjected to modal analysis by performing curve fitting processing by a commercially available

analysis application (ME'scope VES manufactured by SYSTEM PLUS Inc.) to calculate the vibration damping ratio, the mode shape, and the mode frequency at each frequency.

Under such measurement conditions as above, the damping ratios in a 0° bending mode (first order), a 90° bending mode (first order), and a torsion mode (first order) were acquired, and in each of the modes, the damping ratio of 0.30 or more was rated as grade A, the damping ratio of 0.05 or more and less than 0.30 was rated as grade B, and the damping factor of less than 0.05 was rated as grade C. At this time, the case including two or more grades A and no grade C was evaluated as a pass because the damping properties were improved isotropically. Further, the case including one or less grade A or including grade C was evaluated as a failure because the damping properties were not improved isotropically.

Incidentally, as illustrated in FIG. 12A as an example, the above-described 0° bending mode (first order) is a vibration mode in which one node is present in the longitudinal direction of the sample, and as illustrated in FIG. 12B as an example, the 90° bending mode (first order) is a vibration mode in which one node is present in the lateral direction of the sample. Further, as illustrated in FIG. 12C as an example, the torsion mode (first order) is a vibration mode in which nodes are present on the diagonal line of the sample.

0 Evaluation of bending elastic modulus

The mechanical properties of the obtained CFRP composite steel plate were measured in accordance with JIS K 7074: 1988. In more detail, a test material of the CFRP composite steel plate having a width of 15.0 mm and a length of 100 mm was pressed at a reduction speed of 5 mm/min at a distance of 80 mm between fulcrums, and the bending strength [MPa] at that time was measured. The case where the obtained bending strength was 530 MPa or more was rated as grade A, the case where the obtained bending strength was 400 MPa or more was rated as grade B, and the case where the obtained bending strength was lower than 400 MPa was rated as grade C.

0 Comprehensive evaluation

The case where the values in the evaluation of vibration damping properties and the evaluation of bending elastic modulus were both A was rated as grade A, the case where one or more of the value rated as B were included in the evaluation of vibration damping properties and the evaluation of bending elastic modulus was rated as grade B, and the case where one or more of the value rated as C were included in the evaluation of vibration damping properties and the evaluation of bending elastic modulus was rated as grade C, and the grade C case was evaluated as a failure.

The obtained results are illustrated in Table 1 below collectively.

[Table 1]

TABLE 1

| No. | MIXED RESIN LAYER | | | | | | | | COMPOSITE STEEL PLATE | | | | EVALUATION | | | | COMPREHENSIVE EVALUATION |
|---|---|---|---|---|---|---|---|---|---|---|---|---|---|---|---|---|---|
| | CFRP LAYER | | RESIN LAYER | | | | | | | | | | DAMPING RATIO | | | STRENGTH | |
| | FIBER KIND | MATRIX RESIN | KIND OF ADDED RESIN | YOUNG'S MODULUS (GPa) | LOSS COEFFICIENT (-) | ECCENTRICITY RATIO (%) | PRESENT POSITION | AREA RATIO (vol%) | STEEL PLATE THICKNESS (A/mm) | MIXED RESIN LAYER THICKNESS (B/mm) | A/B | PROJECTED AREA RATIO | TORSION (FIRST ORDER) | 0° BENDING (FIRST ORDER) | 90° BENDING (FIRST ORDER) | BENDING STRENGTH | |
| COMPARATIVE EXAMPLE 1 | PITCH-BASED CARBON REINFORCING FIBER | EPOXY RESIN | - | - | - | - | - | 0 | 0.4 | 0.80 | 0.50 | 1.0 | B | A | B | A | C |
| COMPARATIVE EXAMPLE 2 | PITCH-BASED CARBON REINFORCING FIBER | EPOXY RESIN | - | - | - | - | - | 0 | 0.4 | 1.20 | 0.33 | 1.0 | B | C | A | A | C |
| COMPARATIVE EXAMPLE 3 | PITCH-BASED CARBON REINFORCING FIBER | EPOXY RESIN | - | - | - | - | - | 0 | 0.4 | 1.80 | 0.22 | 1.0 | A | C | A | A | C |
| EXAMPLE 1 | PITCH-BASED CARBON REINFORCING FIBER | EPOXY RESIN | HYTREL | 0.08 | 0.057 | 20.8 | MIDDLE | 29.4 | 0.4 | 0.95 | 0.42 | 1.0 | A | A | B | A | A |

(continued)

| No. | MIXED RESIN LAYER | | | | | | | | COMPOSITE STEEL PLATE | | | | EVALUATION | | | | COMPREHENSIVE EVALUATION |
|---|---|---|---|---|---|---|---|---|---|---|---|---|---|---|---|---|---|
| | CFRP LAYER | | RESIN LAYER | | | | | | | | | | DAMPING RATIO | | | STRENGTH | |
| | FIBER KIND | MATRIX RESIN | KIND OF ADDED RESIN | YOUNG'S MODULUS (GPa) | LOSS COEFFICIENT (-) | ECCENTRICITY RATIO (%) | PRESENT POSITION | AREA RATIO (vol%) | STEEL PLATE THICKNESS (A/mm) | MIXED RESIN LAYER THICKNESS (B/mm) | A/B | PROJECTED AREA RATIO | TORSION (FIRST ORDER) | 0° BENDING (FIRST ORDER) | 90° BENDING (FIRST ORDER) | BENDING STRENGTH | |
| EXAMPLE 2 | PITCH-BASED CARBON REINFORCING FIBER | EPOXY RESIN | HYTFEL | 0.08 | 0.057 | 43.8 | STEEL PLATE SIDE | 29.4 | 0.4 | 0.95 | 0.42 | 1.0 | A | A | A | A | A |
| EXAMPLE! | PITCH-BASED CARBON REINFORCING FIBER | EPOXY RESIN | HYTFEL | 0.08 | 0.057 | 58.3 | CFRP SIDE | 29.4 | 0.4 | 0.95 | 0.42 | 1.0 | A | A | A | A | A |
| EXAMPLE 4 | PITCH-BASED CARBON REINFOTCING FIBER | EPOXY RESIN | HYTREL | 0.08 | 0.057 | 0.0 | BETWEEN LAYERS | 29.4 | 04 | 0.95 | 0.42 | 1.0 | A | A | A | B | B |
| EXAMPLE 5 | PITCH-BASED CARBON REINFORCING FIBER | EPOXY RESIN | HYTREL | 0.08 | 0.057 | 0.0 | BETWEEN LAYERS | 45.5 | 0.4 | 1.10 | 0.36 | 1.0 | A | A | A | B | B |

(continued)

| No. | MIXED RESIN LAYER | | | | | | | | COMPOSITE STEEL PLATE | | | | EVALUATION | | | | COMPREHENSIVE EVALUATION |
|---|---|---|---|---|---|---|---|---|---|---|---|---|---|---|---|---|---|
| | CFRP LAYER | | RESIN LAYER | | | | | | | | | | DAMPING RATIO | | | STRENGTH | |
| | FIBER KIND | MATRIX RESIN | KIND OF ADDED RESIN | YOUNG'S MODULUS (GPa) | LOSS COEFFICIENT (-) | ECCENTRICITY RATIO (%) | PRESENT POSITION | AREA RATIO (vol%) | STEEL PLATE THICKNESS (A/mm) | MIXED RESIN LAYER THICKNESS (B/mm) | A/B | PROJECTED AREA RATIO | TORSION (FIRST ORDER) | 0° BENDING (FIRST ORDER) | 90° BENDING (FIRST ORDER) | BENDING STRENGTH | |
| EXAMPLE 6 | PITCH-BASED CARBON REINFORCING FIBER | EPOXY RESIN | HYTREL | 0.08 | 0.057 | 64.4 | STEEL PLATE SIDE | 21.7 | 0.4 | 1.35 | 0.30 | 1.0 | A | A | A | A | A |
| EXAMPLE 7 | PITCH-BASED CARBON REINFORCING FIBER | EPOXY RESIN | MODIFIED SILICONE RESIN (SUPER XG) | 0.02 | 0.290 | 35.3 | STEEL PLATE SIDE | 42.6 | 0.4 | 1.80 | 0.22 | 1.0 | A | A | A | A | A |
| EXAMPLE 8 | RTCH-BASED CARBON REINFORCING FIBER | EPOXY RESIN | POLYESTER URETHANE RESIN | 0.004 | 0.701 | 33.1 | STEEL PLATE SIDE | 23.1 | 0.4 | 1.40 | 0.20 | 1.0 | A | A | A | A | A |
| EXAMPLE 9 | PITCH-BASED CARBON REINFORCING FIBER | EPOXY RESIN | PP | 1.38 | 0.047 | 33.9 | STEEL PLATE SIDE | 33.3 | 0.4 | 0.98 | 0.41 | 1.0 | A | B | A | A | A |

(continued)

| No. | MIXED RESIN LAYER | | | | | | | | COMPOSITE STEEL PLATE | | | | EVALUATION | | | | COMPREHENSIVE EVALUATION |
|---|---|---|---|---|---|---|---|---|---|---|---|---|---|---|---|---|---|
| | CFRP LAYER | | RESIN LAYER | | | | | | | | | | DAMPING RATIO | | | STRENGTH | |
| | FIBER KIND | MATRIX RESIN | KIND OF ADDED RESIN | YOUNG'S MODULUS (GPa) | LOSS COEFFICIENT (-) | ECCENTRICITY RATIO (%) | PRESENT POSITION | AREA RATIO (vol%) | STEEL PLATE THICKNESS (A/mm) | MIXED RESIN LAYER THICKNESS (B/mm) | A/B | PROJECTED AREA RATIO | TORSION (FIRST ORDER) | 0° BENDING (FIRST ORDER) | 90° BENDING (FIRST ORDER) | BENDING STRENGTH | |
| EXAMPLE 10 | RTCH-BASED CARBON REINFORCING FIBER | EPOXY RESIN | PP | 1.38 | 0.047 | 23.1 | MIDDLE | 33.3 | 0.4 | 0.98 | 0.41 | 1.0 | A | B | A | A | A |
| EXAMPLE 11 | PITCH-BASED CARBON REINFORCING FIBER | EPOXY RESIN | PP | 1.38 | 0.047 | 59.7 | CFRP SIDE | 33.3 | 0.4 | 0.98 | 0.41 | 1.0 | A | B | A | A | A |
| EXAMPLE 12 | PITCH-BASED CARBON REINFORCING FIBER | EPOXY RESIN | PP | 1.38 | 0.047 | 0.0 | BETWEEN LAYERS | 33.3 | 0.4 | 0.98 | 0.41 | 1.0 | A | B | A | B | A |
| EXAMPLE 16 | PITCH-BASED CARBON REINFORCING FIBER | EPOXY RESIN | MODIFED SILICONE FE8IN (SUPER XG) | 0.02 | 0.290 | 13.9 | MIDDLE | 48.1 | 0.4 | 1.80 | 0.22 | 1.0 | A | A | A | A | A |

(continued)

| No. | MIXED RESIN LAYER | | | | | | | | COMPOSITE STEEL PLATE | | | | EVALUATION | | | | COMPREHENSIVE EVALUATION |
|---|---|---|---|---|---|---|---|---|---|---|---|---|---|---|---|---|---|
| | CFRP LAYER | | RESIN LAYER | | | | | | | | | | DAMPING RATIO | | | STRENGTH | |
| | FIBER KIND | MATRIX RESIN | KIND OF ADDED RESIN | YOUNG'S MODULUS (GPa) | LOSS COEFFICIENT (-) | ECCENTRICITY RATIO (%) | PRESENT POSITION | AREA RATIO (vol%) | STEEL PLATE THICKNESS (A/mm) | MIXED RESIN LAYER THICKNESS (B/mm) | A/B | PROJECTED AREA RATIO | TORSION (FIRST ORDER) | 0° BENDING (FIRST ORDER) | 90° BENDING (FIRST ORDER) | BENDING STRENGTH | |
| EXAMPLE 14 | RTCH-BASED CARBON REINFORCING FIBER | EPOXY RESIN | MODIFED SILICONE RESIN (SUPER XG) | 0.02 | 0.290 | 24.5 | CFRP SIDE | 48.1 | 04 | 1.80 | 0.22 | 1.0 | A | A | A | A | A |
| EXAMPLE 15 | PITCH-BASED CARBON REINFORCING FIBER | EPOXY RESIN | MODIFED SILICONE RESIN (SUPER XG) | 0.02 | 0.290 | 0.0 | BETWEEN LAYERS | 48.1 | 0.4 | 1.80 | 0.22 | 1.0 | A | A | A | B | A |
| EXAMPLE 16 | RTCH-BASED CARBON REINFORCING FIBER | EPOXY RESIN | POLYESTER URETHANE RESIN | 0.004 | 0.701 | 14.6 | MIDDLE | 23.8 | 0.4 | 1.35 | 0.30 | 1.0 | A | A | A | A | A |
| EXAMPLE 17 | RTCH-BASED CARBON REINFORCING FIBER | EPOXY RESIN | POLYESTER URETHANE RESIN | 0.004 | 0.701 | 37.0 | CFRP SIDE | 23.8 | 0.4 | 1.35 | 0.30 | 1.0 | A | A | A | A | A |

(continued)

| No. | MIXED RESIN LAYER | | | | | | | | COMPOSITE STEEL PLATE | | | | EVALUATION | | | | COMPREHENSIVE EVALUATION |
|---|---|---|---|---|---|---|---|---|---|---|---|---|---|---|---|---|---|
| | CFRP LAYER | | RESIN LAYER | | | | | | | | | | DAMPING RATIO | | | STRENGTH | |
| | FIBER KIND | MATRIX RESIN | KIND OF ADDED RESIN | YOUNG'S MODULUS (GPa) | LOSS COEFFICIENT (-) | ECCENTRICITY RATIO (%) | PRESENT POSITION | AREA RATIO (vol%) | STEEL PLATE THICKNESS (A/mm) | MIXED RESIN LAYER THICKNESS (B/mm) | A/B | PROJECTED AREA RATIO | TORSION (FIRST ORDER) | 0° BENDING (FIRST ORDER) | 90° BENDING (FIRST ORDER) | BENDING STRENGTH | |
| EXAMPLE 18 | PITCH-BASED CARBON REINFORCING FIBER | EPOXY RESIN | POLYESTER URETHANE RESIN | 0.004 | 0.701 | 0.0 | BETWEEN LAYERS | 23.8 | 0.4 | 1.35 | 0.30 | 1.0 | A | A | A | B | A |
| COMPARATIVE EXAMPLE 4 | PITCH-BASED CARBON REINFORCING FIBER | EPOXY RESIN | PET | 8.12 | 0.006 | 48.2 | STEEL PLATE SIDE | 21.7 | 04 | 0.90 | 0.44 | 1.0 | B | C | B | A | C |

As is clear from Table 1, it reveals that the test materials corresponding to the examples of the present invention exhibited excellent results in the evaluation of vibration damping properties and the evaluation of bending elastic modulus, while the test materials corresponding to the comparative examples of the present invention failed to obtain excellent results in at least one of the evaluation of vibration damping properties and the evaluation of bending elastic modulus.

In the foregoing, the preferred embodiment of the present invention has been explained in detail while referring to the attached drawings, but, the present invention is not limited to such examples. It is apparent that a person ordinary skilled in the art to which the present invention pertains is able to devise various variation or modification examples within the scope of the technical spirit described in the claims, and it should be understood that such examples belong to the technical scope of the present invention as a matter of course.

[Explanation of Codes]

| | |
|---|---|
| 1 | carbon fiber reinforced plastic composite metal plate for vehicles |
| 10 | metal plate |
| 15 | second metal plate |
| 20 | mixed resin layer |
| 30 | bonding resin layer |
| 201 | CFRP layer |
| 203 | resin layer |

## Claims

**1.** A carbon fiber reinforced plastic composite metal plate for vehicles, comprising:

a predetermined metal plate; and
a mixed resin layer including: a plurality of carbon fiber reinforced plastic layers provided on at least a portion of one surface or both surfaces of the metal plate, the carbon fiber reinforced plastic layers containing a predetermined matrix resin and carbon reinforcing fibers present in the matrix resin; and a resin layer located at least between any layers of the carbon fiber reinforced plastic layers or at the interface between the carbon fiber reinforced plastic layer and the metal plate, the resin layer containing a resin having a Young's modulus of less than 1.5 GPa and a loss coefficient of 0.01 or more, which is different from the matrix resin.

**2.** The carbon fiber reinforced plastic composite metal plate for vehicles according to claim 1, further comprising:

a predetermined second metal plate, wherein
the mixed resin layer is sandwiched between the metal plate and the second metal plate.

**3.** The carbon fiber reinforced plastic composite metal plate for vehicles according to claim 1 or 2, wherein
in a cross section when the mixed resin layer is cut in a thickness direction, the ratio of an area of the resin layer to the total area of the mixed resin layer is 5% or more and 60% or less.

**4.** The carbon fiber reinforced plastic composite metal plate for vehicles according to any one of claims 1 to 3, wherein in a cross section when the mixed resin layer is cut in a thickness direction, the eccentricity ratio of the resin layer defined based on the distance from the neutral plane is 5% or more and 65% or less.

**5.** The carbon fiber reinforced plastic composite metal plate for vehicles according to any one of claims 1 to 3, wherein in a cross section when the mixed resin layer is cut in a thickness direction, the resin layer is unevenly distributed on the side close to the neutral plane.

**6.** The carbon fiber reinforced plastic composite metal plate for vehicles according to any one of claims 1 to 5, wherein the resin having a Young's modulus of less than 1.5 GPa and a loss coefficient of 0.01 or more is at least one of a thermoplastic polyester elastomer, a modified silicone resin, a polyolefin resin, a polyurethane resin, and a polyester resin.

**7.** The carbon fiber reinforced plastic composite metal plate for vehicles according to any one of claims 1 to 6, wherein

the matrix resin is a phenoxy resin or an epoxy resin.

8. The carbon fiber reinforced plastic composite metal plate for vehicles according to any one of claims 1 to 7, wherein the carbon reinforcing fibers are pitch-based carbon reinforcing fibers.

9. The carbon fiber reinforced plastic composite metal plate for vehicles according to any one of claims 1 to 8, wherein

   the entire thickness of the carbon fiber reinforced plastic composite metal plate for vehicles is within a range of 0.40 mm or more and 3.00 mm or less, and
   the ratio of the thickness of the metal plate to the thickness of the mixed resin layer is 0.10 or more and 4.00 or less.

10. The carbon fiber reinforced plastic composite metal plate for vehicles according to any one of claims 1 to 9, wherein the ratio of a projected area of the metal plate to a projected area of the mixed resin layer when the carbon fiber reinforced plastic composite metal plate for vehicles is viewed from above in the thickness direction is 1.0 or more and 20.0 or less.

11. The carbon fiber reinforced plastic composite metal plate for vehicles according to any one of claims 1 to 10, wherein the position where a composite of the mixed resin layer is formed is at least one corner portion of the metal plate.

12. The carbon fiber reinforced plastic composite metal plate for vehicles according to any one of claims 1 to 10, wherein the position where a composite of the mixed resin layer is formed is a substantially center portion of the metal plate.

13. The carbon fiber reinforced plastic composite metal plate for vehicles according to any one of claims 1 to 10, wherein the position where a composite of the mixed resin layer is formed is at least one corner portion of the metal plate and a substantially center portion of the metal plate.

14. The carbon fiber reinforced plastic composite metal plate for vehicles according to any one of claims 1 to 13, wherein the metal plate is a zinc-based plated steel plate or an alloyed hot-dip galvanized steel plate.

15. The carbon fiber reinforced plastic composite metal plate for vehicles according to any one of claims 1 to 14, used for a door outer panel, a roof panel, a hood, a fender, or a side outer panel of an automobile.

16. A panel for vehicles using the carbon fiber reinforced plastic composite metal plate for vehicles according to any one of claims 1 to 15.

FIG. 1A

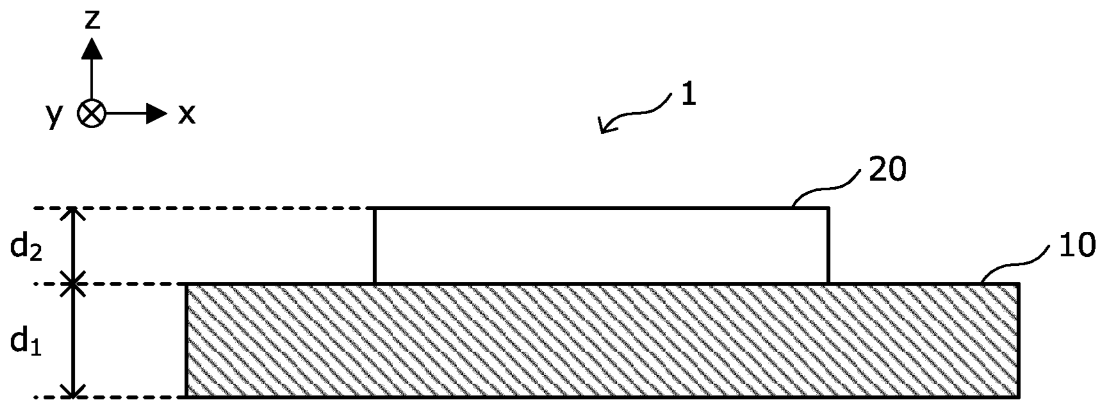


FIG. 1B

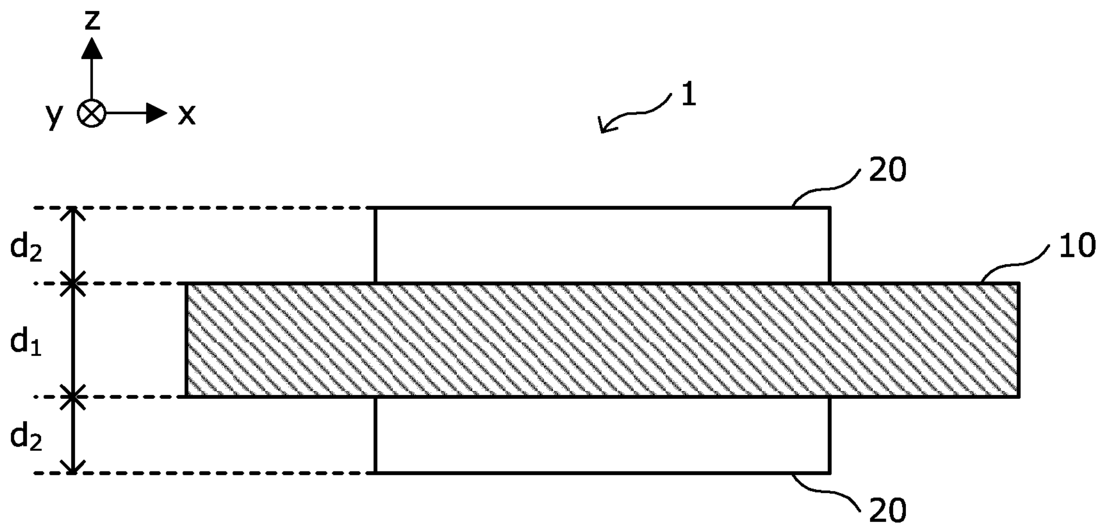

FIG. 1C

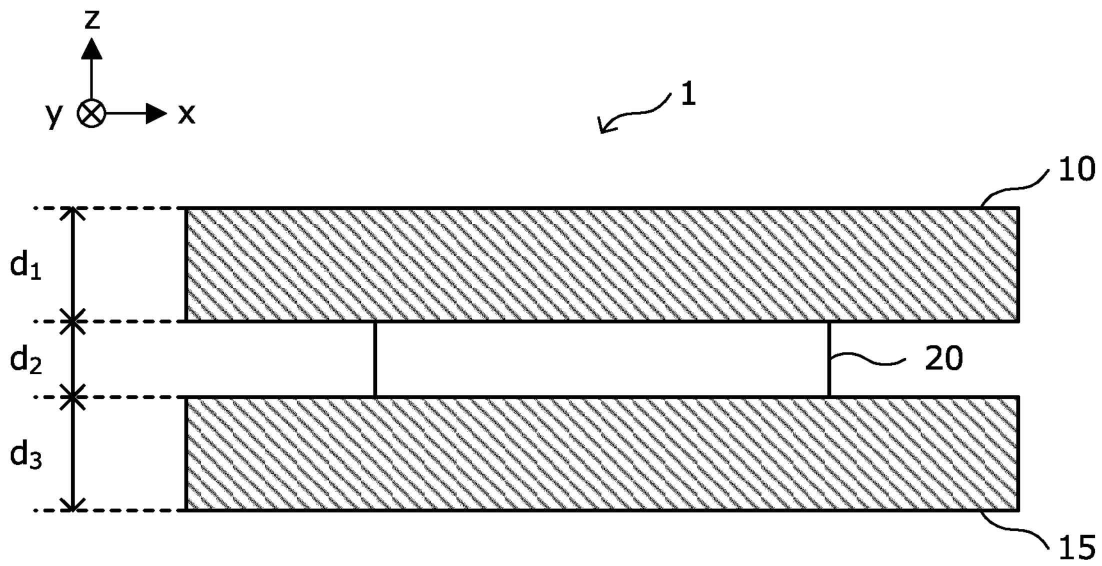


FIG. 2

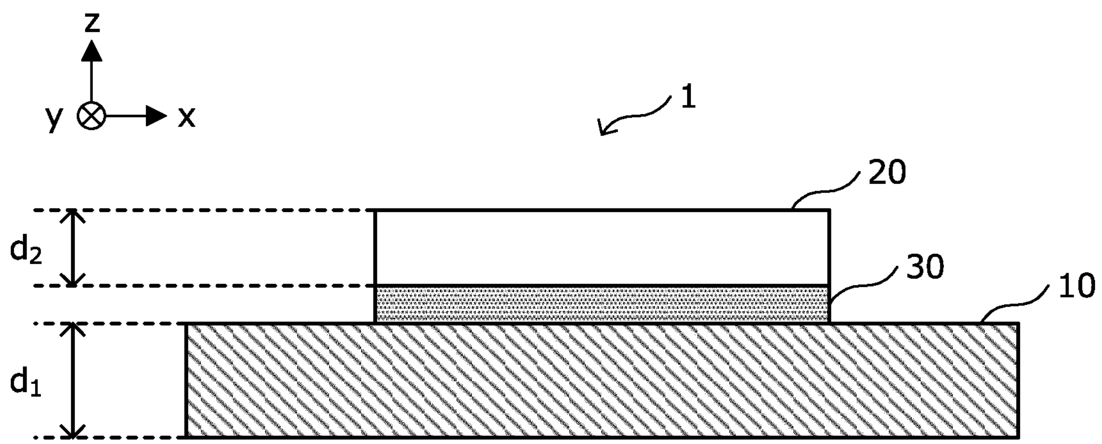

FIG. 3A

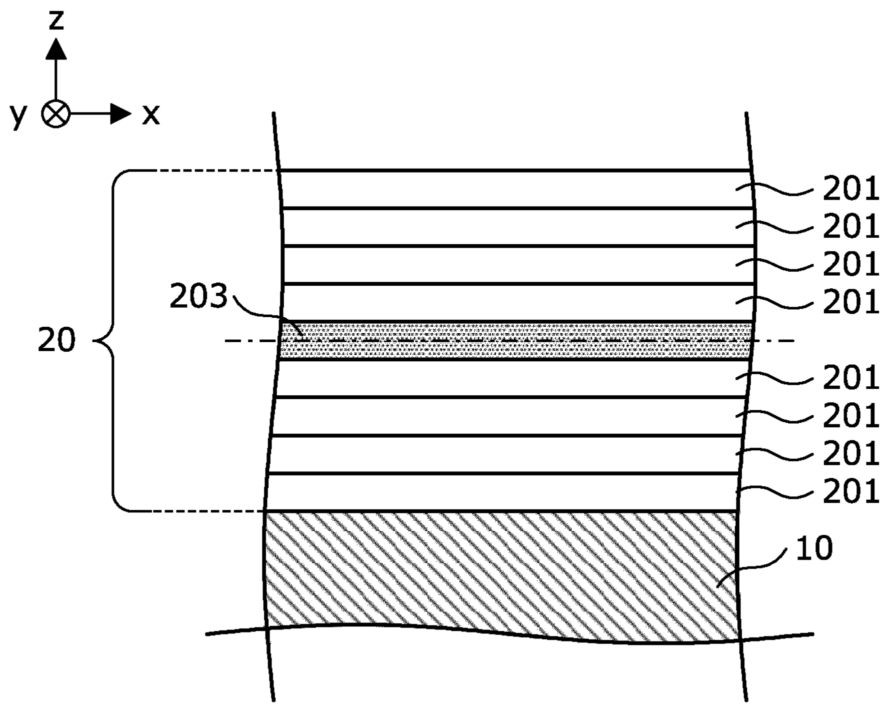
z
y
x
20
203
201
201
201
201
201
201
201
201
10

FIG. 3B

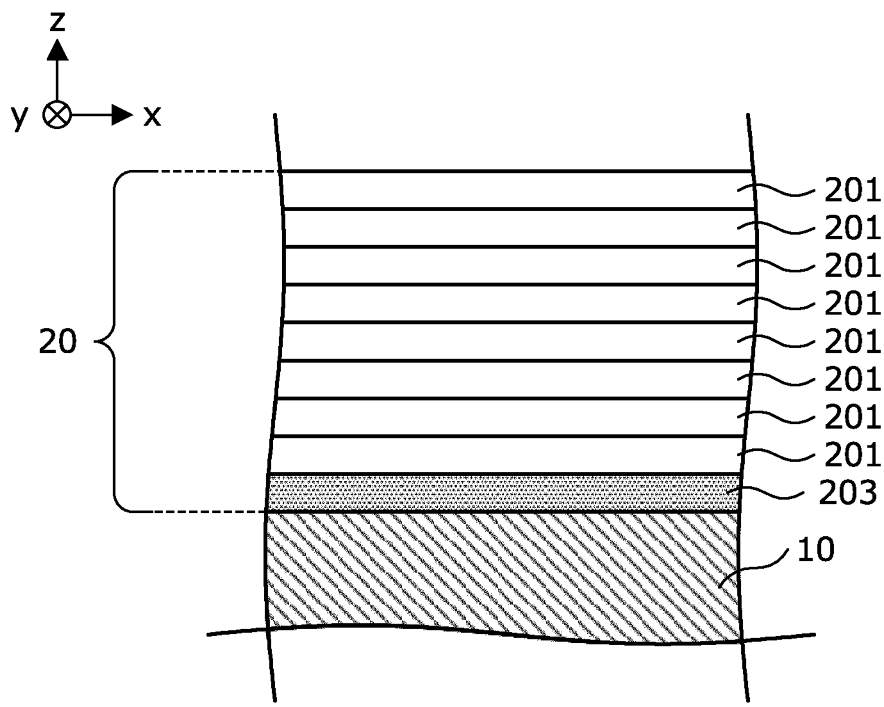
z
y
x
20
201
201
201
201
201
201
201
201
203
10

FIG. 3C

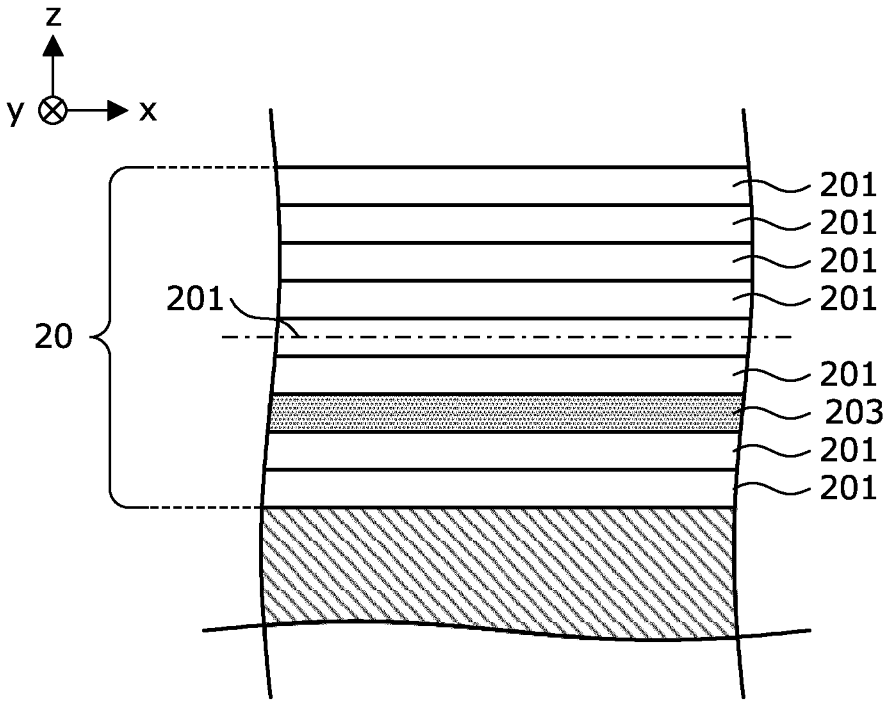
z
y
x
20
201
201
201
201
201
201
203
201
201

FIG. 4A

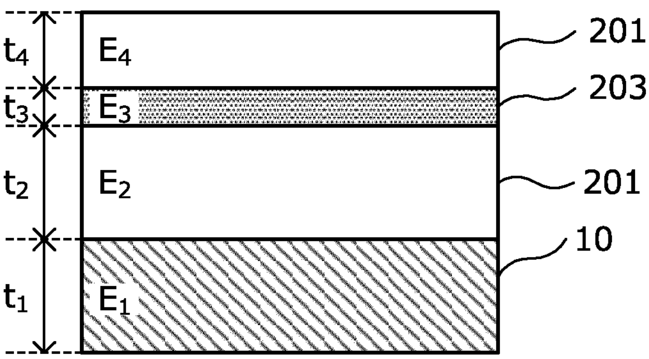
t4
t3
t2
t1
E4
E3
E2
E1
201
203
201
10

FIG. 4B

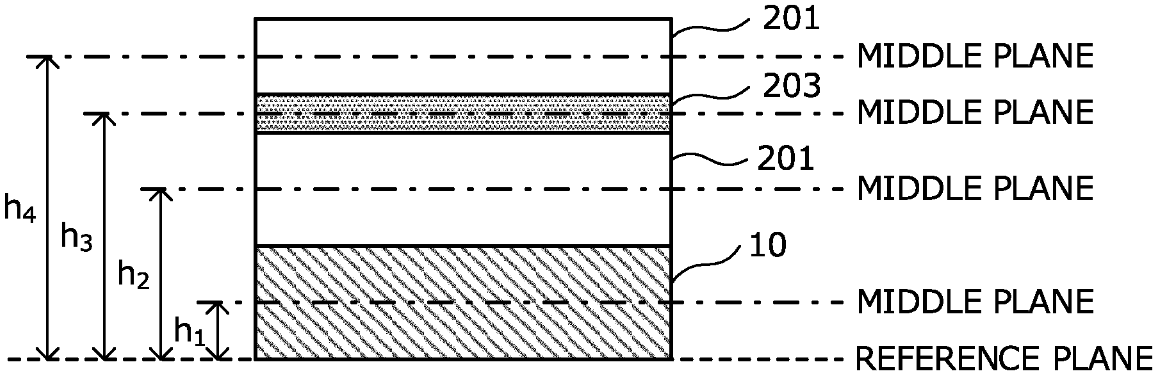
201
MIDDLE PLANE
203
MIDDLE PLANE
201
MIDDLE PLANE
10
MIDDLE PLANE
REFERENCE PLANE
$h_4$
$h_3$
$h_2$
$h_1$

FIG. 5

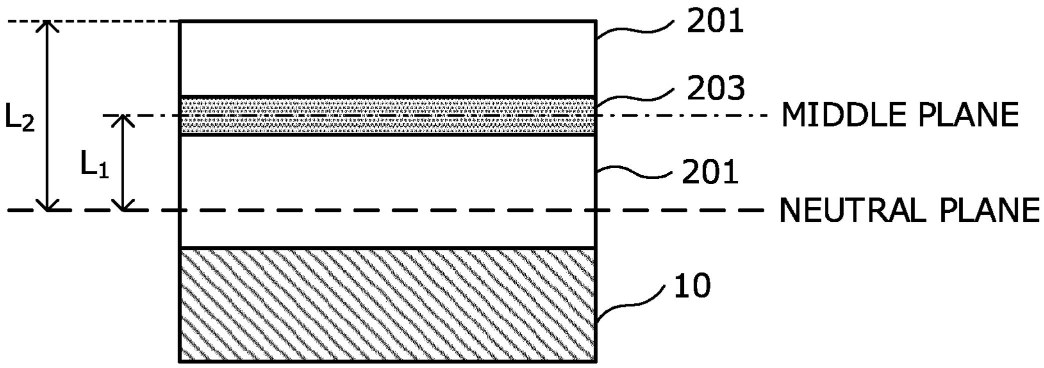
201
203
MIDDLE PLANE
201
NEUTRAL PLANE
10
$L_2$
$L_1$

FIG. 6

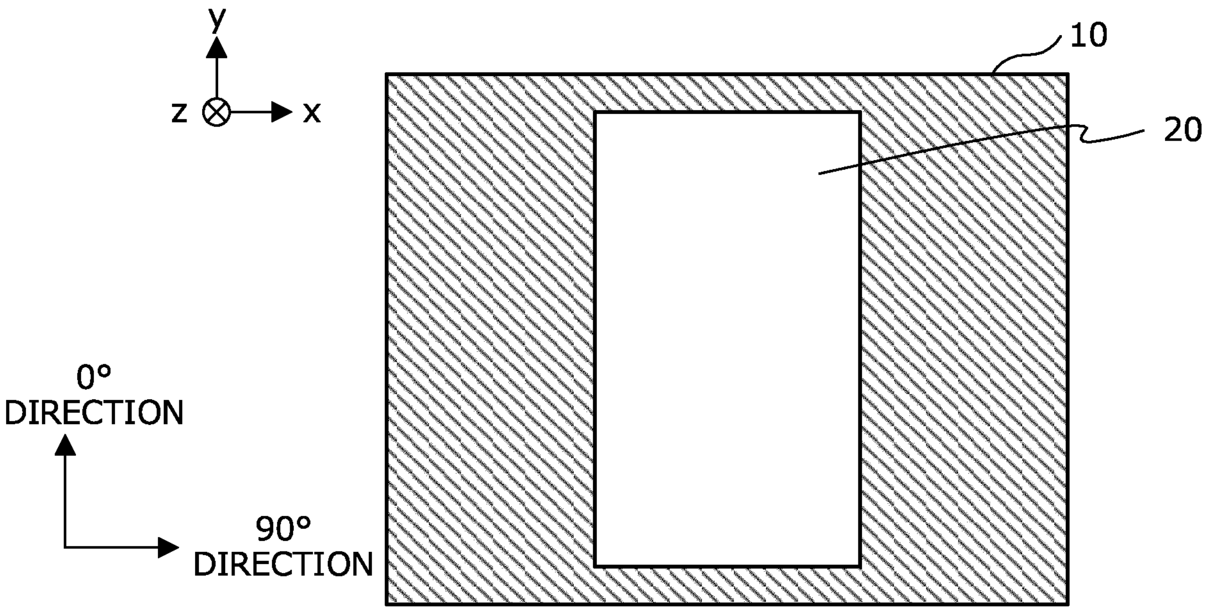
y
z
x
10
20
0°
DIRECTION
90°
DIRECTION

FIG. 7

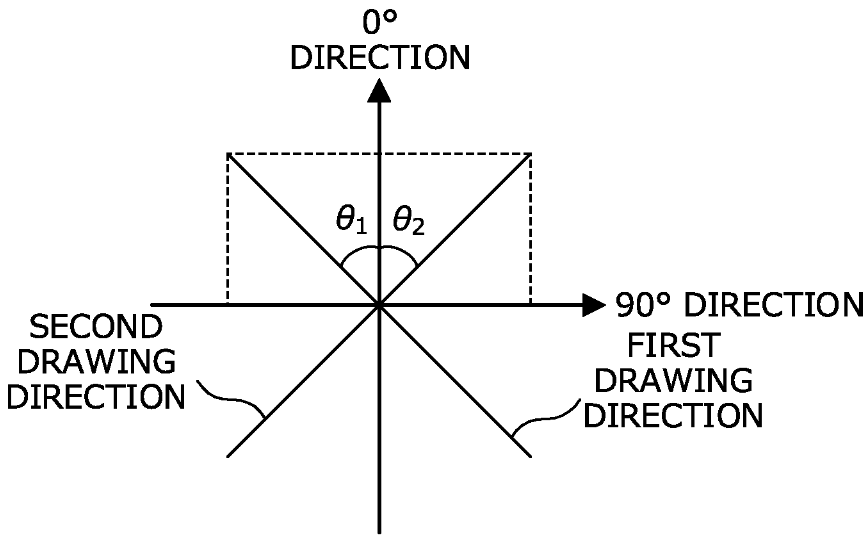
0°
DIRECTION
$\theta_1$
$\theta_2$
90° DIRECTION
SECOND
DRAWING
DIRECTION
FIRST
DRAWING
DIRECTION

FIG. 8

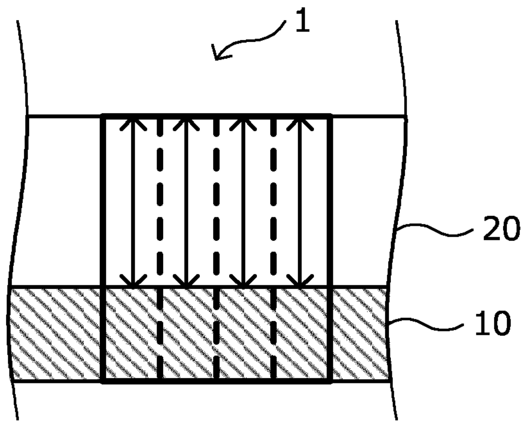


FIG. 9A

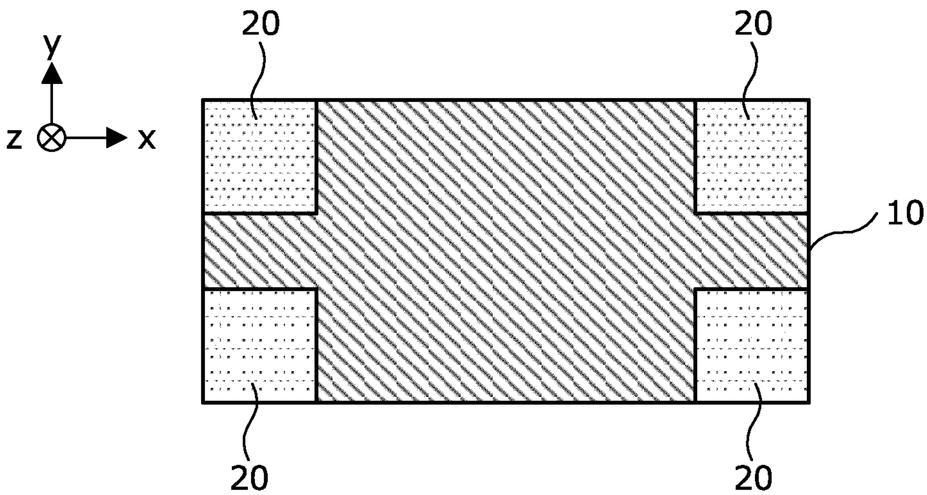

FIG. 9B

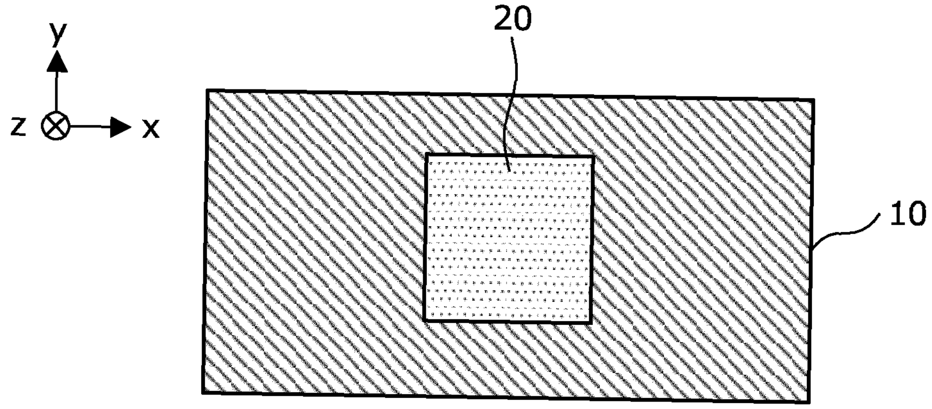


FIG. 9C

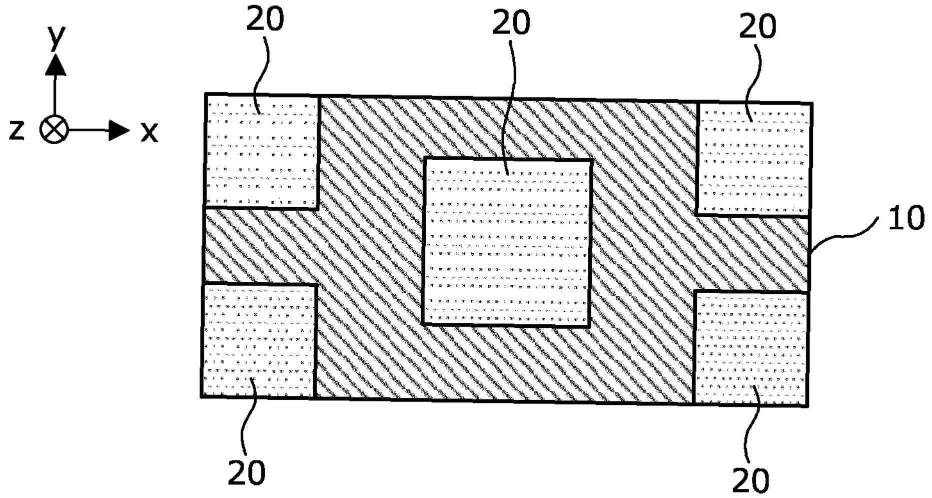

FIG. 10

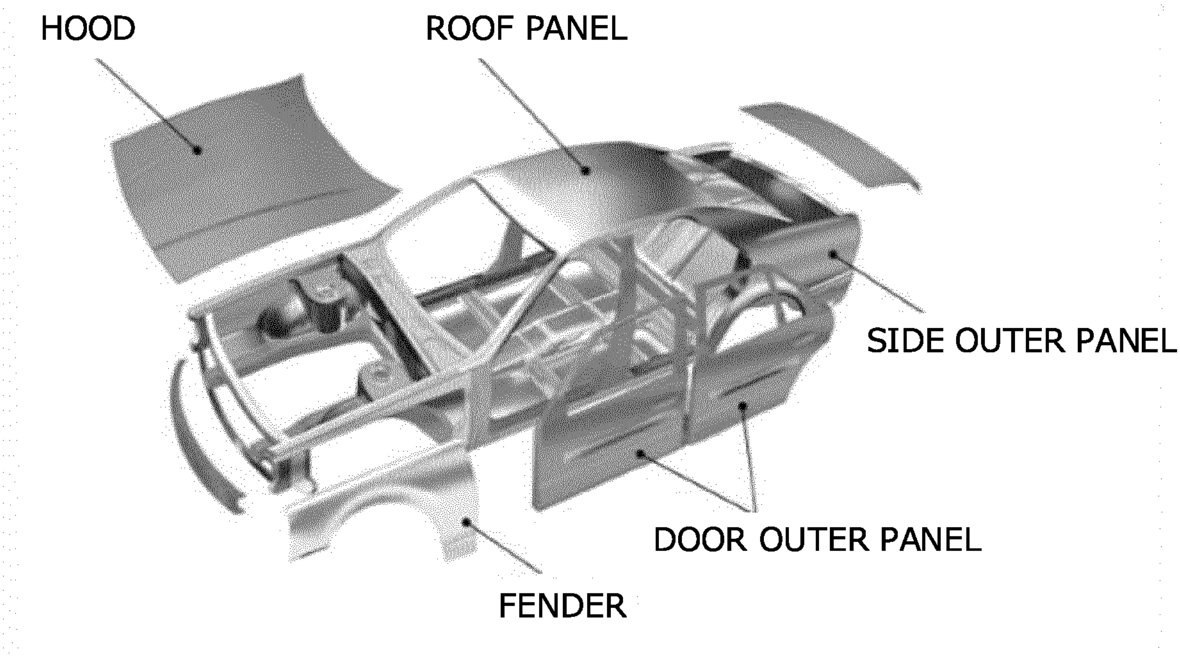
HOOD
ROOF PANEL
SIDE OUTER PANEL
DOOR OUTER PANEL
FENDER

FIG. 11

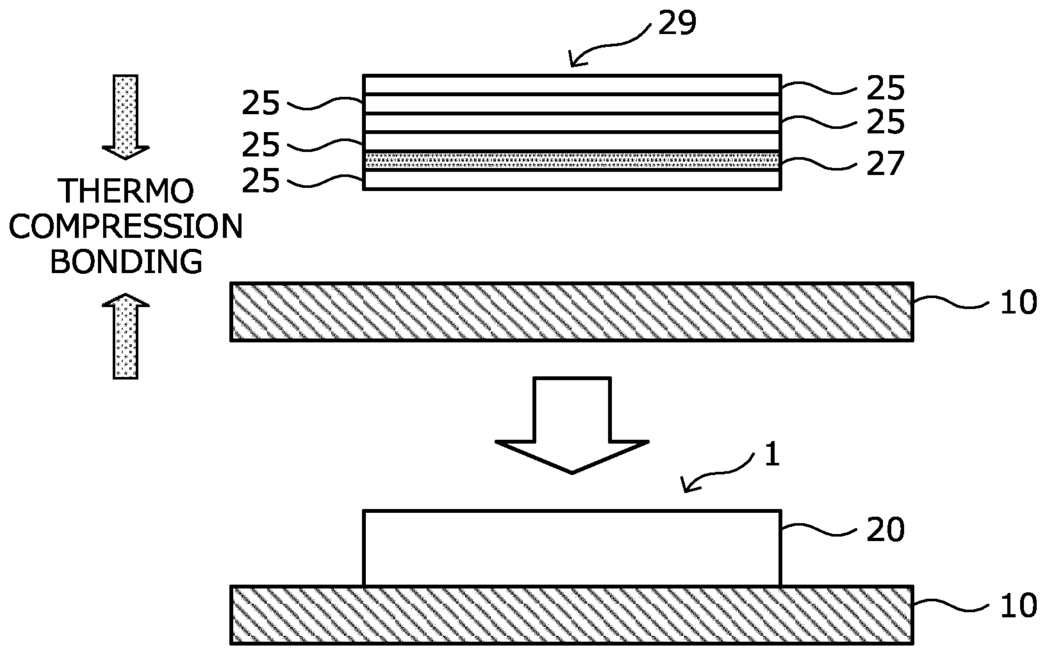
29
25
25
25
25
25
27
THERMO
COMPRESSION
BONDING
10
1
20
10

FIG. 12A

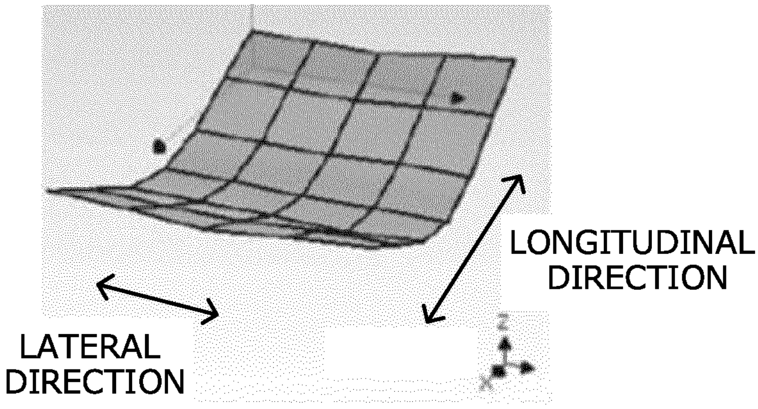


FIG. 12B

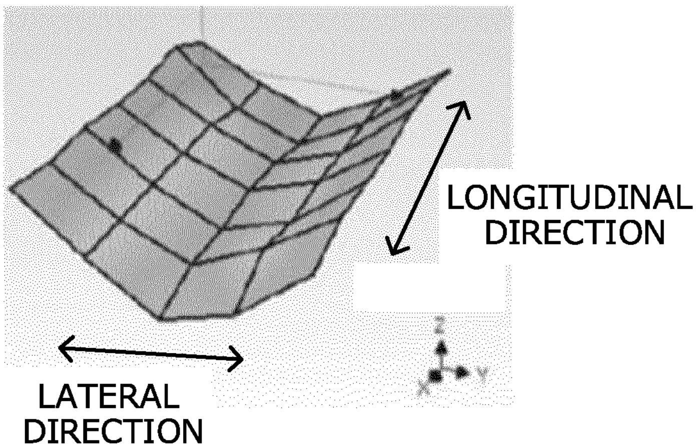


FIG. 12C

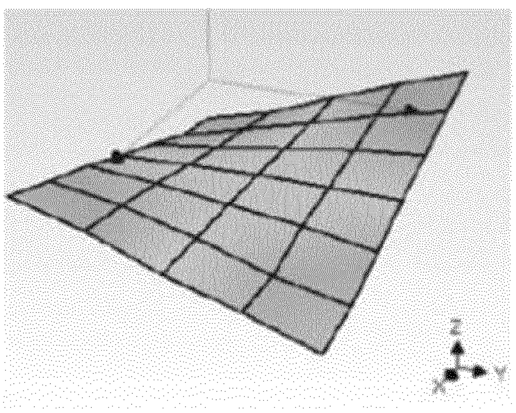

## INTERNATIONAL SEARCH REPORT

International application No.
PCT/JP2020/015038

A. CLASSIFICATION OF SUBJECT MATTER
Int. Cl. B62D29/04(2006.01)i
FI: B62D29/04 A

According to International Patent Classification (IPC) or to both national classification and IPC

B. FIELDS SEARCHED

Minimum documentation searched (classification system followed by classification symbols)
Int. Cl. B62D29/04

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2010-517864 A (RIETER TECHNOLOGIES AG) 27 May 2010, claims, fig. 1-14 | 1-16 |
| A | JP 2019-119212 A (NIPPON STEEL CORP.) 22 July 2019, claims, fig. 1-12 | 1-16 |

☐ Further documents are listed in the continuation of Box C.  ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09.06.2020 | 23.06.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/015038

| Patent Documents referred to in the Report | Publication Date | Patent Family | Publication Date |
|---|---|---|---|
| JP 2010-517864 A | 27.05.2010 | US 2010/0013255 A1<br>claims, fig. 1-14<br>WO 2008/098395 A2<br>EP 1955899 A1<br>AT 488403 T<br>ES 2355865 T3<br>PT 2125437 E<br>PL 2125437 T3 | |
| JP 2019-119212 A | 22.07.2019 | WO 2019/132042 A1<br>claims, fig. 1-12 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017007514 A
- JP 2014162848 A
- JP 2001253371 A